(19)

Europäisches
Patentamt
European
Patent Office
Office européen
des brevets

(11) **EP 4 787 247 A1**

(12) **EUROPEAN PATENT APPLICATION**

(43) Date of publication:
**05.08.2026  Bulletin 2026/32**

(21) Application number: **25305139.5**

(22) Date of filing: **31.01.2025**

(51) International Patent Classification (IPC):
**G06N 10/40** (2022.01)    **G06N 10/70** (2022.01)

(52) Cooperative Patent Classification (CPC):
**G06N 10/40; G06N 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Alice & Bob**
**75015 Paris (FR)**
• **Ecole Nationale Superieure des Mines de Paris**
**75006 Paris (FR)**

(72) Inventors:
• **GUILMIN, Pierre**
**75015 Paris (FR)**
• **ROUCHON, Pierre**
**75006 Paris (FR)**
• **TILLOY, Antoine**
**75006 Paris (FR)**

(74) Representative: **Atout PI Laplace
Immeuble Up On
25 Boulevard Romain Rolland
CS 40072
75685 Paris Cedex 14 (FR)**

(54) **METHOD AND UNIT FOR CHARACTERIZING OR CONTROLLING A QUANTUM SYSTEM**

(57)    A method of characterizing or controlling a quantum system (1), wherein the dynamics of the quantum system is describable via a stochastic master equation having a plurality of physical parameters, and wherein the quantum system comprises: (i) one or more quantum-state-hosting structure(s) (6); (ii) a detector (8) coupled to at least one of the quantum-state-hosting structure(s) (6) and configured to measure a continuous signal output from the quantum-state-hosting structure(s) (6) to provide a measurement signal from the quantum system (1), wherein the detector (8) is configured to digitize the continuous signal over time bins of duration $\Delta t$; and (iii) one or more signal generator(s) (11,13) coupled to the at least one portion and configured to input control signal(s) to physically control the dynamics of the quantum system. The method comprises: (I) physically measuring, with the detector, a continuous signal from the quantum system to provide a plurality of digitized discrete-time binned signals $\{I_1, \dots, I_k\}$ up to time $t = k\Delta t$, wherein $k$ is an integer denoting the k-th time bin of the detector; (II) computing a binned state of the quantum system at time $t = k\Delta t$, $\overline{\rho}_k = \mathbb{E}[\rho_{k\Delta t} \mid I_1, \dots, I_k]$, wherein the binned state $\overline{\rho}_k$ is the average of a plurality of solutions $\rho_{k\Delta t}$ of the stochastic master equation at time $t = k\Delta t$ each for different possible continuous signals wherein, for each of the plurality of solutions $\rho_{k\Delta t}$, the value of the possible continuous signal integrated over a given time bin is substantially equal to the discrete-time binned signal for said given time bin; and (III) using the binned state $\overline{\rho}_k$ to: assign a value to at least one of the plurality of physical parameters which characterizes the quantum system; and/or assign a value to at least one of the plurality of physical parameters which parametrizes the input control signal(s) to physically control the dynamics of the quantum system; and/or optimize a readout discriminator of a quantum state readout protocol. There is provided a quantum characterisation or control unit, a computer program product, and a computer-readable medium.

| Measure continuous signal to provide discrete-time binned signals  301 | → | Compute binned state using the discrete-time binned signals  303 |
|---|---|---|

Use the binned state to assign a value to:
(a) physical parameter(s) characterizing the quantum system; and/or
(b) physical parameter(s) which parametrize the input control signal(s) to control the quantum system; and/or
(c) optimize a readout discriminator.
305

**Fig. 3**

EP 4 787 247 A1

**Description**

FIELD OF THE INVENTION

The invention concerns a method of characterizing or controlling a quantum system measured continuously, and in particular using a discrete-time stochastic master equation to reconstruct the state of the continuously measured quantum system from a digitised (time-averaged) measurement record, as well as a quantum characterization or control unit for doing same. The results of the characterization or control may be used for subsequent optimal control of the quantum system.

BACKGROUND

Characterising and controlling the dynamics of a quantum system is a fundamental task in experimental quantum physics. Accurate characterisation and control is vital for successful exploitation of the quantum system, such as a quantum processor for quantum computation, or a quantum device for quantum sensing or quantum communication applications.

For instance, crafting the control pulses to be sent to manipulate the quantum system typically requires accurate characterisation of the dynamics of the quantum system in order to provide the most optimal control pulse parameters.

Moreover, successful operation of a quantum processor requires regular recalibration routines to bring the delicate quantum systems back into operability regimes. Such routines require rapid and accurate characterization of the quantum systems in order to apply effective correcting calibration operations.

Characterising the dynamics of a quantum system requires comparing experimental data measured from the quantum system to a theoretical model of the quantum system. Typically, continuously measured quantum systems are modelled by the theory of stochastic master equation (SME), which gives an expression for the system state $\rho_t$ at a given time $t$ as a non-trivial function of the continuously measured signal before that time.

However, in practice, this state itself is not accessible to the observer, as the measured signal is filtered and digitised by an amplification chain of the detection apparatus. Said otherwise, the observer only has access to a discrete-time measurement record $\{I_1, ..., I_N\}$, wherein each discrete value $I_k$ is defined by integrating the continuous-time signal $I_t$ against the impulse (e.g. filter) response function $f_k$ of the acquisition chain for the $k$-th time bin

$$I_k = \int_{(k-1)\Delta t}^{k\Delta t} f_k(t)I_t \mathrm{d}t .$$

Thus, there is a problem when using this experimental data (which is inherently a discrete-time signal) to reconstruct and compare with the system state $\rho_t$ (which is inherently calculated assuming a continuous-time signal). That is, there is a practical gap between what is observed (the digitised signal $I_k$), and what is predicted by theory (how the state $\rho_t$ evolves conditioned on the continuous-time signal $I_t$).

This disparity is exasperated when some dynamics of the quantum system varies on time-scales on the order of, or even smaller than, the duration of the time bins $\Delta t$ of the acquisition chain. This is the case, for instance, in superconducting circuits, wherein the typical time bin of analogue-to-digital converters or photocounters used therein is on the order of a few nanoseconds, but wherein certain physical dynamics of the superconducting circuit oscillate or vary at even smaller time scales than such time bins.

This invention aims to address one or more of the aforementioned problems to provide an improved method of characterizing a quantum system.

SUMMARY

In a first aspect, there is provided a method of characterizing or controlling a quantum system, wherein the dynamics of the quantum system is describable via a stochastic master equation having a plurality of physical parameters, and wherein the quantum system comprises: (i) one or more quantum-state-hosting structure(s); (ii) a detector coupled to at least one of the quantum-state-hosting structure(s) and configured to measure a continuous signal output from the quantum-state-hosting structure(s) to provide a measurement signal from the quantum system, wherein the detector is configured to digitize the continuous signal over time bins of duration $\Delta t$; and (iii) one or more signal generator(s) coupled to the at least one of the quantum-state-hosting structure(s) and configured to input control signal(s) to physically control the dynamics of the quantum system. The method comprises: (I) physically measuring, with the detector, a continuous signal from the quantum system to provide a plurality of digitized discrete-time binned signals $\{I_1, ..., I_k\}$ up to time $t = k\Delta t$, wherein $k$ is an integer denoting the $k$-th time bin of the detector; (II) computing a binned state of the quantum system at time $t = k\Delta t$,

$$\bar{\rho}_k = \mathbb{E}[\rho_{k\Delta t} \,|\, I_1, ..., I_k] ,$$ wherein the binned state $\bar{\rho}_k$ is the average of a plurality of solutions $\rho_{k\Delta t}$ of the stochastic master equation at time $t = k\Delta t$ each for different possible continuous signals wherein, for each of the plurality of solutions

$\rho_{k\Delta t}$, the value of the possible continuous signal integrated over a given time bin is substantially equal to the discrete-time binned signal for said given time bin; and (III) using the binned state $\overline{\rho}_k$ to: assign a value to at least one of the plurality of physical parameters which characterizes the quantum system; and/or assign a value to at least one of the plurality of physical parameters which parametrizes the input control signal(s) to physically control the dynamics of the quantum system; and/or optimize a readout discriminator of a quantum state readout protocol.

Thus, the present inventive method neither averages over all of the possible solutions $\rho_{k\Delta t}$ of the stochastic master equation when ignoring the plurality of digitized discrete-time binned signals (which amounts to solving the usual Lindblad master equation for the deterministic evolution of the state), nor directly solves the continuous-time stochastic master equation by approximating the plurality of digitized discrete-time binned signals as a continuous measurement record. Rather, the present invention conditions averaging over the possible solutions $\rho_{k\Delta t}$ of the stochastic master equation on the integral of the continuous signal being what was observed. Said otherwise, the binned state is the average of the states solving the stochastic master equation for all possible realisations of the continuous signals only where the integrated signal value is the one observed for each time bin of the plurality of digitized discrete-time binned signals. That is, the average is only over states $\rho_{k\Delta t}$ that are consistent with the observations. This estimate is the best Bayesian estimate of the state from the observer's point of view, and thus by using this binned state $\overline{\rho}_k$ to characterize or optimize control of the quantum system, the present inventors have discovered a more precise and acute characterization of the physical parameters or optimization of the control.

As will be appreciated, operation (IIII)(a) may be achieved via numerically fitting the binned state, as a function of at least one of the plurality of physical parameters which characterizes the quantum system, to experimental data, such as experimental data comprising a quantum state tomography (e.g. Wigner tomography or Husimi tomography), to thereby find the value of said at least one of the plurality of physical parameters which best fits the experimental data.

Operation (III)(b) may comprise numerically reconstructing the state of the quantum system $\rho_t$ at any time from $t = 0$ to $t = k\Delta t$, or numerically predicting a future state of the quantum system $\rho_{t > k\Delta t}$ at a future time $t > k\Delta t$.

Operation (III)(b) may, for instance, comprise optimizing a loss function which depends on at least one target operating attribute to be reached by the quantum system under the input control signal(s) from the one or more signal generator(s) and/or at least one target operating attribute to be reached by the one or more signal generator(s) whilst inputting control signal(s) to physically control the dynamics of the quantum system.

Each of the one or more quantum-state-hosting structure(s) may comprise a portion configured to host a physical degree of freedom, such as a physical oscillatory mode, and wherein the detector may be coupled to at least one of the quantum-state-hosting structure(s) and configured to measure continuous signals output from the physical degree of freedom to provide measurement signals from the quantum system. In an embodiment, the detector has binary output with dark count rate $\theta \geq 0$ and detector efficiency and $0 < \eta \leq 1$, such that the stochastic master equation describing the dynamics of the quantum system is of the jump type, and wherein operation (II) comprises computing the binned state $\overline{\rho}_k$ by: (i) assigning an initial binned state $\overline{\rho}_0 = \rho_0$ at time $t = 0$ describing the initial state of the quantum system; and (ii) calculating the binned state of the quantum system at time $t = k\Delta t$ via the iterative formula $\overline{\rho}_k = \dfrac{\mathcal{K}_k(\overline{\rho}_{k-1})}{\text{Tr}[\mathcal{K}_k(\overline{\rho}_{k-1})]}$, wherein $\mathcal{K}_k$ is a completely positive map and is given by $\mathcal{K}_k = \dfrac{1}{2\pi} \int_{-\pi}^{\pi} \mathrm{d}p\, e^{ipI_k} \exp_{(k-1)\Delta t}^{k\Delta t} \left( \mathcal{L} + \left( e^{-ip} - 1 \right) \mathcal{C}_L \right)$, wherein $\exp_{(k-1)\Delta t}^{k\Delta t}(\mathcal{O})$ denotes the time-ordered exponential of the superoperator $\mathcal{O}$, $\mathcal{L}$ is the Liouvillian of the stochastic master equation describing the quantum system, and $\mathcal{C}_L$ is the correlation superoperator defined for an operator $O$ by $\mathcal{C}_L(O) = \theta O + \eta L O L^\dagger$, with $L$ being the measured jump operator of the stochastic master equation describing the dynamics of the quantum system.

The action of the completely positive map $\mathcal{K}_k$ on the binned state $\overline{\rho}_{k-1}$ at the k-th time bin, $\mathcal{K}_k(\overline{\rho}_{k-1})$, may be computed using a numerical quadrature, and preferably using the Gauss-Legendre quadrature.

Other numerical quadratures may be used, such as other Gaussian quadratures.

In an embodiment, the detector has an output taking a continuous range of values with detector efficiency and $0 < \eta \leq 1$, such that the stochastic master equation describing the dynamics of the quantum system is of the diffusive type, and wherein operation (II) comprises computing the binned state $\overline{\rho}_k$ by: (i) assigning an initial binned state $\overline{\rho}_0 = \rho_0$ at time $t = 0$ describing the initial state of the quantum system; and (ii) calculating the binned state of the quantum system at time $t = k\Delta t$ via the iterative formula $\overline{\rho}_k = \dfrac{\mathcal{K}_k(\overline{\rho}_{k-1})}{\text{Tr}[\mathcal{K}_k(\overline{\rho}_{k-1})]}$, wherein $\mathcal{K}_k$ is a completely positive map and is given by $\mathcal{K}_k = \dfrac{1}{2\pi} \int_{-\infty}^{\infty} \mathrm{d}p\, e^{ipI_k - \frac{\Delta t}{2}p^2} \exp_{(k-1)\Delta t}^{k\Delta t} (\mathcal{L} - ip\mathcal{C}_L)$, wherein $\exp_{(k-1)\Delta t}^{k\Delta t}(\mathcal{O})$ denotes the time-ordered exponential of the superoperator $\mathcal{O}$, $\mathcal{L}$ is the Liouvillian of the stochastic master equation describing the quantum system, and $\mathcal{C}_L$ is

the correlation superoperator defined for an operator *O* by

$$\mathcal{C}_L(O) = \sqrt{\eta}(LO + OL^\dagger),$$

, with *L* being the measured jump operator of the stochastic master equation describing the dynamics of the quantum system.

The action of the completely positive map $\mathcal{K}_k$ on the binned state $\overline{\rho}_{k-1}$ at the *k*-th time bin, $\mathcal{K}_k(\overline{\rho}_{k-1})$, may be computed using a numerical quadrature, and preferably using the Gauss-Hermite quadrature.

Other numerical quadratures may be used, such as other Gaussian quadratures.

It will be appreciated that the form of the completely positive map $\mathcal{K}_k$ for quantum systems described by stochastic master equations of both the jump and diffuse types can be elegantly expressed as

$$\mathcal{K}_k = \frac{1}{2\pi} \int \mathrm{d}p \, e^{ipl_k} \exp^{k\Delta t}_{(k-1)\Delta t} \left( \mathcal{L}^{-ip\mathbb{1}_k} \right),$$

, where $\mathcal{L}^j$ is a generating Liouvillian defined for a function

$$j = -ip\mathbb{1}_k$$

as: (i)

$$\mathcal{L}^j_t = \mathcal{L}_t + (e^{jt} - 1)\mathcal{C}_L$$

if the stochastic master equation describing the dynamics of the quantum system is of the jump type, where $\mathcal{C}_L$ is the correlation superoperator defined for an operator *O* by $\mathcal{C}_L(O) = \theta O + \eta L O L^\dagger$ if the detector has binary output with dark count rate $\theta \geq 0$ and detector efficiency and $0 < \eta \leq 1$; or (ii) $\mathcal{L}^j_t = \mathcal{L}_t + j_t \mathcal{C}_L + j_t^2/2 \, \mathcal{J}$ if the stochastic master equation describing dynamics of the quantum system is of the diffusive type, with $\mathcal{J}$ the identify superoperator, and $\mathcal{C}_L$ is a correlation superoperator defined for an operator *O* by $\mathcal{C}_L(O) = \sqrt{\eta}(LO + OL^\dagger)$ if the detector has continuous output with detector efficiency and $0 < \eta \leq 1$. In both cases, L is the measured jump operator of the stochastic master equation describing the dynamics of the quantum system, and $\mathcal{L}_t$ is the standard Liouvillian of the stochastic master equation describing the dynamics of the quantum system.

For the avoidance of doubt, the time-ordered exponential $\exp^{k\Delta t}_{(k-1)\Delta t}(\mathcal{O})$ of a superoperator $\mathcal{O}$ is between the earlier time $(k - 1)\Delta t$ and the later time $k\Delta t > (k - 1)\Delta t$.

In an embodiment, operation (II) comprises computing the binned state of the quantum system at time $t = k\Delta t$, $\overline{\rho}_k$, perturbatively.

The detector may have an output taking a continuous range of values with detector efficiency and $0 < \eta \leq 1$, such that the stochastic master equation describing the dynamics of the quantum system is of the diffusive type, and wherein computing the binned state of the quantum system perturbatively may comprise: (i) assigning an initial binned state $\overline{\rho}_0 = \rho_0$ at time $t = 0$ describing the initial state of the quantum system; (ii) calculating the binned state of the quantum system at time $t = k\Delta t$ via the iterative formula $\overline{\rho}_k = \frac{\mathcal{K}_k(\overline{\rho}_{k-1})}{\mathrm{Tr}[\mathcal{K}_k(\overline{\rho}_{k-1})]}$, wherein $\mathcal{K}_k$ is a completely positive map and is given by using: (a)

$$\mathcal{K}_k = \frac{e^{-i_k/2}}{\sqrt{2\pi\Delta t}}[\mathcal{J} + \sqrt{\Delta t}^1 i_k \mathcal{C}_L];$$

or (b)

$$\mathcal{K}_k = \frac{e^{-i_k/2}}{\sqrt{2\pi\Delta t}}[\mathcal{J} + \sqrt{\Delta t}^1 i_k \mathcal{C}_L + \sqrt{\Delta t}^2 \left(\mathcal{L} - \frac{1-i_k^2}{2}\mathcal{C}_L^2\right)];$$

or (c)

$$\mathcal{K}_k = \frac{e^{-i_k/2}}{\sqrt{2\pi\Delta t}}[\mathcal{J} + \sqrt{\Delta t}^1 i_k \mathcal{C}_L + \sqrt{\Delta t}^2 \left(\mathcal{L} - \frac{1-i_k^2}{2}\mathcal{C}_L^2\right) + \sqrt{\Delta t}^3 \left(\frac{I_k(i_k^2-3)}{6}\mathcal{C}_L^3 + \frac{I_k}{2}(\mathcal{C}_L\mathcal{L} + \right.$$

$$\left.\left.\mathcal{L}\mathcal{C}_L\right)\right)];$$

or (d)

$$\mathcal{K}_k = \frac{e^{-i_k/2}}{\sqrt{2\pi\Delta t}}[\mathcal{J} + \sqrt{\Delta t}^1 i_k \mathcal{C}_L + \sqrt{\Delta t}^2 \left(\mathcal{L} - \frac{1-i_k^2}{2}\mathcal{C}_L^2\right) + \sqrt{\Delta t}^3 \left(\frac{I_k(i_k^2-3)}{6}\mathcal{C}_L^3 + \right.$$

$$\frac{I_k}{2}(\mathcal{C}_L\mathcal{L} + \mathcal{L}\mathcal{C}_L)\right) + \sqrt{\Delta t}^4 \left(\frac{i_k^4-6i_k^2+3}{24}\mathcal{C}_L^4 + \frac{i_k^2-1}{6}(\mathcal{C}_L^2\mathcal{L} + 2\mathcal{C}_L\mathcal{L}\mathcal{C}_L + \mathcal{L}\mathcal{C}_L^2) + \frac{1}{2}\mathcal{L}^2\right)],$$

wherein $\mathcal{L}$ **is** the Liouvillian of the stochastic master equation describing the quantum system, and $\mathcal{C}_L$ is the correlation superoperator defined for an operator *O by*

$$\mathcal{C}_L(O) = \sqrt{\eta}(LO + OL^\dagger),$$

, with L being the measured jump operator of the stochastic master equation describing the dynamics of the quantum system, and

$$\mathcal{C}_L(O) = \sqrt{\eta}(LO + OL^\dagger),$$

In an embodiment, the quantum system comprises a plurality of detectors each coupled to at least one of the quantum-state-hosting structure(s) and configured to measure continuous signals output from the quantum-state-hosting structure(s) to provide a plurality of measurement signal from the quantum system, wherein the detector is configured to digitize the continuous signal over time bins of duration $\Delta t$, the method comprising: in operation (I), physically measuring, with the detectors, a plurality of continuous signals from the quantum system to provide a plurality $N$ of sets of digitized discrete-time binned signals $\{I_{n,1}, \dots, I_{n,k}\}$ up to time $t = k\Delta t$, wherein $k$ is an integer denoting the k-th time bin of each detector, and wherein index $n \in [1; N]$ identifies each detector; and in operation (II) computing the binned state $\bar{\rho}_k$ by: (i) assigning an initial binned state $\bar{\rho}_0 = \rho_0$ at time $t = 0$; and (ii) calculating the binned state of the quantum system at time $t = k\Delta t$ via the iterative formula $\bar{\rho}_k = \frac{\mathcal{K}_k(\bar{\rho}_{k-1})}{\mathrm{Tr}[\mathcal{K}_k(\bar{\rho}_{k-1})]}$, wherein $\mathcal{K}_k$ is a completely positive map and is given by $\mathcal{K}_k = $

$\left(\frac{1}{2\pi}\right)^N \int \dots \int dp_1 \dots dp_N \left(\prod_{n=1}^N e^{ipI_{n,k}}\right) \exp_{(k-1)\Delta t}^{k\Delta t}(\mathcal{L}^j)$, wherein $\int \dots \int dp_1 \dots d\rho_N$ denotes the multiple integral across variable $\rho_n$, wherein $\exp_{(k-1)\Delta t}^{k\Delta t}(\mathcal{O})$ denotes the time-ordered exponential of the superoperator $\mathcal{O}$, $\mathcal{L}^j$ is a generating Liouvillian superoperator depending on the binary or continuous outputs of each of the detectors.

In an embodiment, wherein the dynamics of the quantum system is configured to be in a steady state, the method may comprise: in operation (I) physically measuring, with the detector, a plurality of sequential continuous signals from the quantum system to provide a plurality $N$ of sets of digitized discrete-time binned signals $\{I_{n,1}, \dots, I_{n,k}\}$ up to time $t = k\Delta t$, wherein $k$ is an integer denoting the $k$-th time bin of each set, and wherein **index** $n \in [1; N]$ identifies each set; and in operation (II) computing the binned state $\bar{\rho}_k$ by: (i) assigning an initial binned state $\bar{\rho}_0 = \rho_0$ at time $t = 0$; and (ii) calculating the binned state of the quantum system at time $t = k\Delta t$ via the iterative formula $\bar{\rho}_k = \frac{\mathcal{K}_k(\bar{\rho}_{k-1})}{\text{Tr}[\mathcal{K}_k(\bar{\rho}_{k-1})]}$, wherein $\mathcal{K}_k$ is a

completely positive map and is given by $\mathcal{K}_k = \left(\frac{1}{2\pi}\right)^N \int ... \int dp_1 ... dp_N \left(\prod_{n=1}^N e^{ipI_{n,k}}\right) \exp_{(k-1)\Delta t}^{k\Delta t}\left(\mathcal{L}^j\right)$, wherein

$\int ... \int dp_1 ... dp_N$ denotes the multiple integral across variable $\rho_n$, wherein $\exp_{(k-1)\Delta t}^{k\Delta t}(\mathcal{O})$ denotes the time-ordered exponential of the superoperator $\mathcal{O}$, $\mathcal{L}^j$ is a generating Liouvillian superoperator depending on the binary or continuous output of the detector.

For the avoidance of doubt, herein calculating a quantity via an iterative formula comprises (i) receiving an initial state; (ii) defining a computational rule expressed as a mathematical formula which defines the relationship between consecutive elements in a sequence starting from the initial state, the formula being configured to update a subsequent state based on a preceding state; (iii) executing (e.g. using a conventional computer) a first application of the computational rule to the initial state; (iv) iteratively or recursively applying the computational rule to the result of the preceding application, such that each subsequent computation is based, at least in part, on one or more previously computed states, thereby generating a sequence of computed output states; and (v) terminating further applications of the computational rule after a threshold (e.g. pre-determined maximum) number of iterations. Thus, in this context, the initial state may be set

as $\bar{\rho}_0 = \rho_0$ at time $t = 0$. Then, the map $\mathcal{K}_1$ may be applied to $\bar{\rho}_0$, such that the next state at *the* $k = 1$ time bin is thus

calculated via $\bar{\rho}_1 = \frac{\mathcal{K}_1(\bar{\rho}_0)}{\text{Tr}[\mathcal{K}_1(\bar{\rho}_0)]}$. The map $\mathcal{K}_2$ may then be applied to $\bar{\rho}_1$ such that the next state $\bar{\rho}_2$ is calculated via

$\bar{\rho}_2 = \frac{\mathcal{K}_2(\bar{\rho}_1)}{\text{Tr}[\mathcal{K}_2(\bar{\rho}_1)]}$, and so on iteratively up to the k-th time bin to provide $\bar{\rho}_k$.

The action of the completely positive map $\mathcal{K}_k$ on the binned state $\bar{\rho}_{k-1}$ at the *k*-th time bin, $\mathcal{K}_k (\bar{\rho}_{k-1})$, may be computed by evaluating the integrand for a plurality of values of $p$, wherein at least some of the integrands are evaluated simultaneously using a vectorized-array computation.

That is, computing $\mathcal{K}_k (\bar{\rho}_{k-1})$ exactly (to machine precision) typically requires evaluating the integrand for a few tens of values of $p$ wherein, for each value of $p$, the cost is the same as solving the Lindblad master equation. Thus, by evaluating at least some of the integrands simultaneously using a vectorized-array computation, the computation is more efficient in time. Preferably, all of the integrands for the plurality of values of $p$ are computed simultaneously, thereby reducing the cost of the iterating scheme to solving a single Lindblad master equation for the same system.

In embodiments, wherein optionally: (A) the plurality of physical parameters comprises a first set $\{\theta_1\}$ of one or more physical parameter(s) in the Liouvillian $\mathcal{L}(\theta_1)$ and/or the measurement back-action $\mathcal{M}_L(\theta_1)$ of the stochastic master equation describing the quantum system and/or a second set $\{\theta_2\}$ of one or more physical parameters of the initial state $\rho_0(\theta_2)$ at time $t = 0$ describing the initial state of the quantum system such that the binned state $\bar{\rho}_k$ is a function of the first $\{\theta_1\}$ and/or second $\{\theta_2\}$ sets, $\bar{\rho}_k(\theta_{1,2})$, and wherein operation (III)(a) comprises: numerically fitting the binned state $\bar{\rho}_k$ $(\theta_{1,2})$ to the plurality of digitized discrete-time binned signals $\{I_1, ... , I_k\}$ to assign a value to at least one physical parameter of the first $\{\theta_1\}$ and/or second $\{\theta_2\}$ sets; and/or (B) the plurality of physical parameters comprises a third set of one or more physical parameters $\{\theta_3\}$ which parametrizes the input control signal(s) of the one or signal generator(s) such that the binned state $\bar{\rho}_k$ is a function of the third set $\{\theta_3\}$, $\bar{\rho}_k(\theta_3)$, and wherein operation (III)(b) comprises: defining a loss function as a function of the fidelity between a target quantum state $\rho_{k\Delta t}^{target}$ and the binned state $\bar{\rho}_k(\theta_3)$ at time $t = k\Delta t$,

$\text{F}\left(\rho_{k\Delta t}^{target}, \bar{\rho}_k(\theta)\right)$; determining a local minimum $\{\theta_{min}\}$ of the loss function within the space of physical control parameters of the input control signals; and using the local minimum $\{\theta_{min}\}$ as the set of physical parameters of the input control signal(s) in a subsequent control operation of the quantum system.

Operation (III) may comprise calculating the probability of the discrete-time binned signal for the k-th time bin using the binned state $\bar{\rho}_{k-1}$ at the $(k - 1)$-th time bin using the formula $\mathbb{P}[I_k \mid \bar{\rho}_{k-1}] = \text{Tr}[\mathcal{K}_k(\bar{\rho}_{k-1})]$.

As will be appreciated, the probability $\mathbb{P}[I_k \mid \bar{\rho}_{k-1}]$ of the next digitized discrete-time signal to be measured $I_k$ may be used to determine the most optimal subsequent time bin for the next acquisition which maximizes the information gained from the experiment, or may be used to optimize a loss function and thus determine the physical control parameters of the signal generator(s) to be used which should achieve the optimized loss function.

There is also provided, in a second aspect, a quantum characterisation or control unit comprising: a quantum system which comprises: (i) one or more quantum-state-hosting structure(s); (ii) a detector coupled to at least one of the quantum-state-hosting structure(s) and configured to measure continuous signals output from the one or more quantum-state-hosting structure(s) to provide measurement signals from the quantum system, wherein the detector uses time bins of duration $\Delta t$; and (iii) one or more signal generator(s) coupled to one or more quantum-state-hosting structure(s) and configured to input control signals to physically control the dynamics of the quantum system. The command circuit is configured to: (a) control the one or more signal generator(s) so as to physically control the dynamics of the quantum system, and (b) control the detector so as to provide measurement signals from the quantum system; wherein the command circuit is configured to perform the method according to the first aspect and any of its embodiments.

For the avoidance of doubt, the time bin $\Delta t$ is time duration, which is the digitisation time of the acquisition chain of the detector. Formally, the digitized discrete-time binned signals $\{I_1, ... , I_k\}$ can be defined by integrating the continuous-time signal $I_t$ (a theoretical quantity not accessible to the observer) against the impulse response $f_k(t)$ of the acquisition chain of the for the k-th time bin $I_k = \int_{(k-1)\Delta t}^{k\Delta t} f_k(t) I_t \mathrm{d}t$. The transfer function $f_k(t)$ of the acquisition chain of the detector at time-point $t = k\Delta t$ may be approximated by a rectangular function of width $\Delta t$, such that the dynamics of the binned quantum state is Markovian. Of course, other transfer functions $f_k(t)$ may be known, depending on the specific form of the detector, and preferably such other transfer functions do not contribute to non-Markovian dynamics of the quantum system.

However, the present invention can also handle transfer functions that contribute to non-Markovian dynamics. For instance, the generalisation to condition on multiple signals can handle filtering functions that overlap over different time-bins and introduce some superficial memory effect.

The present invention is particularly applicable to characterizing or controlling non-linear open quantum systems. Examples of such include superconducting circuits which may comprise transmon qubits, fluxonium qubits, GKP qubits, etc.

That is, in embodiments of the first and second aspects, for each of the one or more quantum-state-hosting structure(s) is a qubit-hosting structure(s), the at least one portion is a resonant portion configured to have at least one resonant physical oscillatory mode, each of the one or more qubit-hosting structure(s) further comprises a non-linear element coupled to the at least one resonant portion so as to non-linearly couple to the at least one resonant physical oscillatory mode, and wherein the one or more signal generator(s) are coupled to the at least one resonant portion and/or to the non-linear element, and the detector is coupled to the at least one resonant portion or to the non-linear element and configured to measure continuous signals output from the at least one resonant physical oscillatory mode to provide measurement signals from the quantum system.

The present invention is furthermore particularly applicable to so-called cat qubits. Thus, in the first and second aspects, the at least one of the quantum-state-hosting structure(s) may be a cat-qubit-hosting structure wherein the physical oscillatory mode hosts a cat qubit. In particular, the cat-qubit-hosting structure may be realized in a superconducting circuit architecture.

Preferably, the command circuit is configured to control the one or more signal generator(s) so as to physically stabilize and manipulate a dissipative cat qubit.

Thus, in some embodiments the quantum system is for hosting cat qubit, the at least one resonant portion may be configured to have a first resonant physical oscillatory mode and a second resonant physical oscillatory mode. The non-linear element coupled to the at least one resonant portion may be configured to non-linearly couple the first resonant physical oscillatory mode and the second resonant physical oscillatory mode such that, under input control signals to the non-linear element, a two-to-one boson exchange is engineered between the first resonant physical oscillatory mode and the second resonant physical oscillatory mode. The signal generator of the one or more signal generator(s) may be coupled to the at least one resonant portion, said signal generator being configured to drive the second resonant physical oscillatory mode. The detector may be coupled to the at least one resonant portion and configured to measure continuous signals output from the second resonant physical oscillatory mode.

Specifically, stabilizing a cat qubit may comprise physically preparing a cat qubit hosted in the first resonant physical oscillatory mode.

The quantum characterisation or control unit may be part of a quantum processor.

The second aspect may comprise any of the features and embodiments described above in relation to the first aspect.

There is also provided a computer program product comprising instructions to cause the quantum characterisation or control unit of the second aspect and any of its embodiments to perform the method of the first aspect and any of its embodiments.

There is also provided a computer-readable medium having stored thereon the computer program product

The quantum characterisation or control unit may be part of a quantum processor.

BRIEF DESCRIPTION OF THE DRAWINGS

Various embodiments of the invention will now be described, by way of example only, and with reference to the accompanying drawings in which:

Figure 1 shows a diagram of a generic quantum system to be characterized according to an embodiment of the invention;

Figure 2 shows components of a quantum system for stabilizing a cat qubit by implementing a parametric dissipative stabilization with an ATS, according to an embodiment of the invention;

Figure 3 shows a flow diagram of method steps for characterizing or controlling a quantum system, according to an embodiment of the invention;

Figure 4 shows how the filtering and digitisation of a time-continuous diffusive signal is modelled, according to an embodiment of the invention;

Figure 5 shows a method for extracting physical parameters characterizing a quantum system, according to an embodiment of the invention;

Figure 6 shows a method of controlling a quantum system, according to an embodiment;

Figures 7-9 show numerically simulated results of the method according to an embodiment of the present invention applied to a discrete-level qubit system; and

Figures 10 and 11 show numerically simulated results of the method according to an embodiment of the present invention applied to a dissipative cat qubit system.

DETAILED DESCRIPTION

**Quantum system to be characterized and/or controlled**

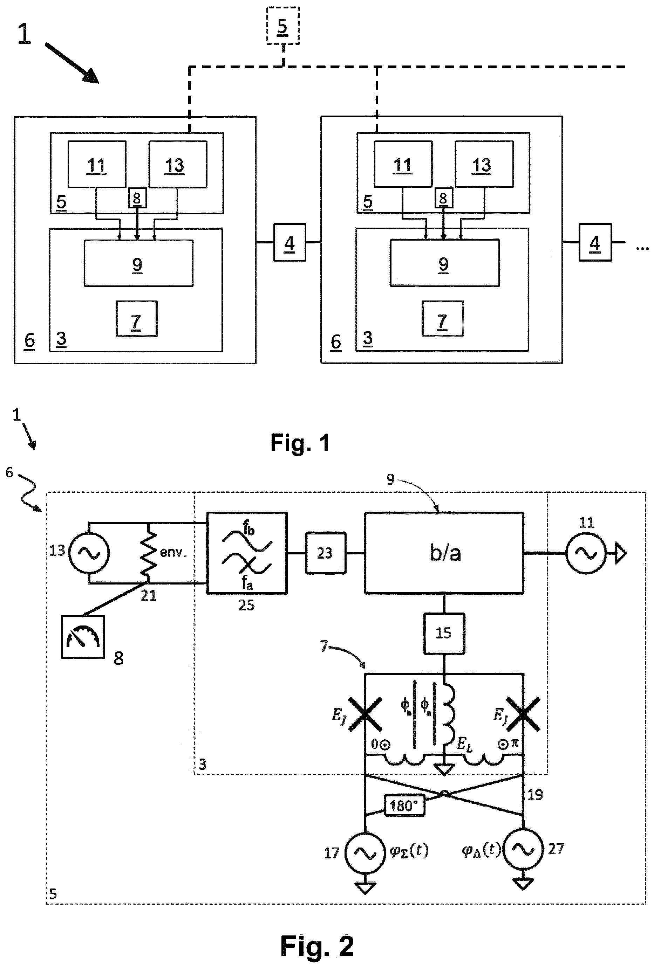

Figure 1 shows an exemplary quantum system 1 which may be arranged to stabilize or host one or more qubits. The quantum system 1 therefore comprises one or more qubit-hosting structures 6, each of which is configured to host or stabilize a qubit therein. Figure 1 shows two qubit-hosting structures 6 as an example, which are coupled to each other via a linear or non-linear coupler 4. As will be appreciated, there could instead be a single qubit-hosting structure 6 or there could be more than two.

Each qubit-hosting structure 6 has at least one resonant portion 9 which is configured to host at least one physical oscillatory mode. In embodiments this could be a first physical oscillatory mode $a$ and a second physical oscillatory mode b. As will be understood, the oscillatory mode(s) could be any physical dynamical oscillation suitable for hosting a qubit, such as electromagnetic, magnonic (spin), phononic (acoustic), plasmonic etc. The at least one resonant portion is a physical structure configured to enable the physical oscillatory mode(s) to live and oscillate therein, such as a superconducting resonator in which electromagnetic wave(s) oscillate, a variety of electrodes and lasers configured to trap ions in potential wells defined thereby.

Coupled to the at least one resonant portion 9 there may be a non-linear element 7, which for instance couples to the physical oscillatory mode. The at least one resonant portion 9 and the non-linear element 7 coupled thereto together thus provide a non-linear quantum circuit 3.

Each qubit-hosting structure 6 also has one or more signal generator(s) 11,13 coupled to the at least one resonant portion 9. In Figure 1, two signal generators are shown both coupled to the at least one resonant portion 9, however there could be only a single signal generator, or more than two. Additionally or alternatively, one or more signal generator(s) could be coupled to the non-linear element 7. Regardless of which part of the non-linear circuit 3 they are coupled to, the one or more signal generator(s) 11, 13 are configured to physically prepare the quantum system 1 in a dynamical configuration by inputting control signals to the at least one resonant portion 9 and/or the non-linear element 7.

Preparing the quantum system 1 in a dynamical configuration (i.e. setting an initial state of the quantum system 1) could be by preparing a qubit of a particular state in at least one of the one or more qubit-hosting structures 6. Similarly, this could be preparing some coherent state hosted in one of the at least one physical oscillatory mode. What is important is that the one or more signal generator(s) 11, 13 enable inputs to the quantum system 1 such that quantum system 1 is a dynamical system. That is, in general, a new dynamical configuration is achieved by either changing the initial state of the quantum system 1 and/or changing the control signals input thereto.

Moreover, as will be appreciated, the specific form of the control signals will depend on the specific architecture of quantum system 1. For instance, as discussed more below, if the quantum system 1 is based on superconducting circuits, the control signals may be electromagnetic pulses and drives (in particular microwave radiation), or current biases, or DC voltage biases etc.

Figure 1 also shows a detector 8 coupled to the at least one resonator portion 9 in each of the qubit-hosting structures. The detector 9 could instead be coupled to the non-linear element 7. What is important, is that the detector 9 is configured to measure continuous signals output from the at least one oscillatory mode hosted by the at least one resonant portion 9 to provide measurement signals from the quantum system 1. The detector 9 may be of any suitable type, for instance the detector could have a discrete-valued output (e.g. a binary output zero or 1), or the detector 9 could have a continuous -valued output.

Figure 1 further shows that each qubit-hosting structure 6 comprises a command circuit 5, which includes a classical processor (i.e. conventional computer) configured to control the signal generator(s) 11,13 and receive the output from the detector 8. Of course, a single command circuit 5 may globally control all of the elements of the various structures of quantum system 1, such as all of the qubit-hosting structures 6 and the non-linear couplers 4 where appropriate, as indicated via the dashed lines in Figure 1.

The command circuit 5 is therefore not "quantum", but rather controls the elements such as the signal generator(s) and the detector which themselves may be coupled to or have some influence on the qubit states hosted in the one or more qubit-hosting structures 6. In this sense then, the command circuit 5 and the quantum system 1 may together be considered quantum characterization or control unit. The quantum characterization or control unit may itself be part of a quantum processor, a quantum communication system, or a quantum detection or sensing system, as the case may be according to the specific technical use the quantum system is put to.

Thus it will be appreciated that the quantum system 1 may comprise one or more quantum-state-hosting structures 6 (as opposed for specifically qubit-hosting structure), each of which is configured to host or stabilize a quantum state for quantum computation, quantum communication or quantum sensing (e.g. qutrits, qudits, quantum harmonic oscillators, quantum registers, etc.), or indeed any other industrial application exploiting the quantum properties of the quantum system 1. For instance, each quantum-state-hosting structure may comprise a portion configured to host a physical degree of freedom (which may or may not be oscillatory in the typical sense - such as electrons in a metal).

The method of the present invention may be applied to a host of different quantum systems, provided a time-continuous signal output from the quantum system is observable by a detector.

For instance, the quantum system could be a driven anharmonic oscillator under heterodyne detection. Such a quantum system could for instance be realised by a transmon coupled to a superconducting resonator with one or more electromagnetic drives applied to the transmon and/or the superconducting resonator.

Another example could be a driven two-level system (i.e. a qubit) whose loss channel is monitored by a photodetector. Such a quantum system could be realised by a tapped-ion qubit (with the computational states being specific electronic states of the ion) placed inside a high-quality and high-finesse optical cavity such that the ion interacts with a quantized electromagnetic field mode of the cavity's field, wherein a laser is used to drive the ion and a photodetector outside configured to detect spontaneous emission from the ion.

The present Inventors have discovered that the present invention is particularly suited to characterising and controlling so-called cat-qubits, which typically face difficulties in swiftly and accurately extracting physical parameters which characterize the quantum system, and which moreover often exhibit dynamics on the order of or on shorter time periods than the shortest time bins possible for ADC detector systems (e.g less than or on the order of a few nanoseconds).

A two-legged cat qubit is defined as a two-dimensional manifold spanned by the so-called cat states $|C_\alpha^\pm\rangle$ which are superpositions of two coherent states $|\alpha\rangle$ and $|-\alpha\rangle$: $|C_\alpha^\pm\rangle = N^\pm(|\alpha\rangle \pm |-\alpha\rangle)$, where $N^\pm = 1/\sqrt{2(1 \pm e^{-2|\alpha|^2})}$.

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flips is only at the cost of linear increase of phase-flips.

The cat qubits can be stabilized or confined by the following exemplary schemes:

(A) A parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a four-wave mixing non-linear element - typically a Josephson junction or an asymmetrically threaded SQUID (ATS) - to the memory mode a and by engineering the Hamiltonian $H/\hbar = g_2(a^2 - \alpha^2)b^\dagger + \text{h.c.}$, where $b$ is the photon annihilation operator of the buffer mode b and $g_2$ is the two-photon coupling rate, by applying to the four-wave mixing non-linear element a pump at frequency $|2f_a - f_b|$ and a drive of the buffer mode b at frequency $f_b$ provided $g_2 < \kappa_b$.

(B) A Kerr Hamiltonian $H/\hbar = \frac{K}{2}(a^{\dagger 2} - \alpha^2)(a^2 - \overline{\alpha^2})$, where $K$ is the amplitude of the Kerr Hamiltonian, $a$ is the photon annihilation operator, and $|\alpha|^2$ is the mean photon number.

(C) A detuned Kerr Hamiltonian $H/\hbar = \frac{K}{2}\left(a^{\dagger 2} - \alpha^2\right)\left(a^2 - \overline{\alpha^2}\right) - \Delta a^\dagger a$ , where $K$ is the amplitude of the Kerr Hamiltonian, $a$ is the photon annihilation operator, $\alpha$ is a complex number defining the cat qubit, and $\Delta$ is the detuning factor.

(D) A two-photon exchange (TPE) Hamiltonian $H/\hbar = g_2(a^2 - \alpha^2)\sigma_+ + \text{h. c.}$ , where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization (A).

(E) A dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$ , where $\kappa_{SC}$ is the squeezed two-photon dissipation rate, $a$ is the photon annihilation operator of the memory mode a, $\alpha$ is a complex number defining the cat qubit, $r$ and $\theta$ are the modulus and argument of the complex squeezing parameter $\xi = re^{i\theta}$. This jump operator can be realized by coupling a lossy buffer mode b with dissipation rate $\kappa_b$, and a four-wave mixing non-linear element - typically a Josephson junction or an ATS -, to the memory mode a and by engineering the Hamiltonian

$$H/\hbar = g_{SC}\left(\left(\cosh(r)a + \sinh(r)e^{i\theta}a^\dagger\right)^2 - \alpha^2\right)b^\dagger + \text{h. c.}$$ , where b is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

(F) A variant of the previous stabilization scheme e), for which the Applicant filed the European patent application EP 23175147.0, in which a bosonic qubit - called "moon cat qubit" since the two blobs of the Wigner function have a crescent moon shape - is stabilized by engineering the Hamiltonian $H/\hbar = g_2(a^2 + \lambda a^\dagger a - \alpha^2)b^\dagger + \text{h. c.}$ , where g$_2$ is the amplitude of the two-photon coupling rate as described above achieved via a pump at frequency $|2f_a - f_b|$, $a$ is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

(G) A DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency $|2f_a - f_b|$ necessary to achieve dissipative stabilization. In particular, the two-photon coupling rate g$_2$ is therefore not limited by the amplitude of the two-photon pump: $g_2 = \frac{E_J}{4}\varphi_a^2\varphi_b$ , where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

(H) A resonant dissipative stabilization, for which the Applicant filed the European patent application EP 21306965.1, with jump operator $L_2 = \sqrt{\kappa_2}(a^2 - \alpha^2)$ , where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a three-wave mixing non-linear element to the memory mode a which engineers the Hamiltonian $H/\hbar = g_2(a^2 - \alpha^2)b^\dagger + \text{h. c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

In the context of Figure 1, in embodiments wherein the quantum system 1 is for hosting a cat qubit via dissipative stabilization, the quantum circuit 3 may be a circuit fabricated out of superconducting material comprising of various resonators, transmission lines, capacitors, inductors, and Josephson junctions, and may be arranged to make possible three- or four-wave mixing between a first physical oscillatory mode a and a second physical oscillatory mode b.

In the following, the first physical oscillatory mode a is used as a memory hosting a cat qubit, while the second physical oscillatory mode b is used as a buffer in between the cat qubit and the external environment. Hereafter, the identifier "physical oscillatory" will be dropped when referring to modes.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 3 is intended to be subject to electromagnetic radiation delivered by the command circuit 5 in order to engineer various non-linear interactions between the first mode a and the second mode b. The frequency of each electromagnetic radiation is tuned to select specific terms within the rotating wave approximation. Typically, for superconducting materials such as aluminium, the electromagnetic radiation used herein may be in the microwave regime.

The non-linear superconducting quantum circuit 3 comprises a non-linear element 7 and at least one resonant portion 9. The non-linear element 7 may be a four-wave mixing non-linear element, such as an ATS or Josephson junction suitable for parametric dissipative stabilization schemes such as scheme (A) above, or one or more Josephson junctions suitable for a DC dissipative stabilization scheme corresponding to scheme (G) above. The non-linear element 7 can also be a three-wave mixing non-linear element, for example a superconducting non-linear asymmetric inductive element (SNAIL) or other three-wave mixing non-linear elements in the case of a resonant dissipative stabilization which corresponds to stabilization scheme (H) above.

The resonant portion 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the non-linear element 7, noted $\varphi_a$ for the first mode a and $\varphi_b$ for the second mode b.

In the schematic diagram of the quantum system 1 illustrated in Figure 1, the non-linear superconducting quantum system 3 comprises only one resonant portion, i.e. the resonant portion 9. This may be achieved via design of the resonator (e.g. various capacitances and inductances as defined for instance by the resonator geometry) such that it hosts modes of different frequencies. The design may also result in the modes having different engineered quality factors.

However, in general it should be understood here that the non-linear superconducting quantum system 3 comprises at least one resonant portion, and typically two or more resonant portions to form the two electromagnetic modes, which act as a cat qubit "memory" mode and a buffer mode.

The first resonator potion may be provided by a 3D resonator, such as a cavity machined out of high purity aluminium (e.g. above 99.99% purity). Similarly, the second resonator portion may provided as an antenna-like cavity. Alternatively, the first and second resonator potions may be provided by a 2D resonator, such as a co-planar waveguide design. Some resonator portions may be 3D, some may be 2D. In either case, such superconducting resonators are considered electromagnetic resonators and the modes hosted therein are electromagnetic modes.

Although electromagnetic resonators are convenient for design and control purposes, the resonator portions need not necessarily be electromagnetic resonators. In particular, for the first resonator portion which hosts the cat qubit, it could be a nanomechanical resonator, such as phononic-crystal-defect resonators (PCDRs), similar to those described in P. Arrangoiz-Arriola, E. A. Wollack, Z. Wang, M. Pechal, W. Jiang, T. P. McKenna, J. D. Witmer, R. Van Laer, and A. H. Safavi-Naeini's work, "Resolving the energy levels of a nanomechanical oscillator," published in Nature 571, 537 (2019). These PCDRs are periodically patterned suspended nanostructures that support localized acoustic resonances in the gigahertz range. They are made from a piezoelectric material like LiNbO3, enabling the coupling of these resonances to superconducting circuits with nearly the same efficiency as standard electromagnetic cavities. Specifically, quasi-one-dimensional PCDRs made from lithium niobate, a piezoelectric crystalline material, could be used, with modes localized within a volume less than 1 $\mu$m3 of a suspended nanostructure.

In such acoustic resonators, the cat qubit is encoded in the phonons of the resonator.

Other types of acoustic resonators, such as acoustic membranes, also exist. The primary requirement is an acoustic-to-electromagnetic coupler, to couple the acoustic first resonator portion to the non-linear element 7.

Furthermore, other types of resonators may be used, such as a magnetic resonator wherein the quanta of oscillations are magnons (collective spin excitations). An example could be a designed yttrium-ion-garnet (YIG) particle, as described in Kounalakis, Marios, Gerrit EW Bauer, and Yaroslav M. Blanter. "Analog quantum control of magnonic cat states on a chip by a superconducting qubit." Physical review letters 129.3 (2022): 037205. Again, there is a requirement to couple magnetic first resonator portion to the non-linear element 7. Yet another type of resonator suitable for hosting cat qubits could be semiconductor double quantum dots embedded in a cavity such as a split-ring resonator cavity as disclosed in Kozin, Valerii K., et al. "Quantum phase transitions and cat states in cavity-coupled quantum dots." Physical review research 6.3 (2024): 033188.

Thus, herein a cat qubit may be encoded in the bosons of the resonator. Herein, for the sake of simplification, the 2-to-1 boson exchange is a 2-to-1 photon exchange, however it will be appreciated that all reference to photons and photon exchange regarding the first mode which hosts the cat qubit can be replaced with bosons or boson exchange (e.g. acoustic phonons, or magnons, or indeed plasmons).

The command circuit 5 is arranged to deliver control signals, such as electromagnetic radiation of DC voltage biases. To this end, as illustrated in figure 1, the command circuit 5 comprises signal generators in the form of at least a first mode drive 11 and a second mode drive 13. For instance, the command circuit 5 may be arranged at least to drive the second mode b by delivering radiation at a frequency substantially equal to the second resonant frequency $f_b$ to the resonant portion 9.

By "a frequency substantially equal to", it should be understood that, ideally, the frequency is exactly equal to the desired value. However, in practice, the frequency value deviates from the desired value, typically by 1 or even 5%, due to the inherent precision of the hardware used.

Moreover, as will be understood, the frequency of a mode may be shifted in use. For instance, under certain dynamical interactions such as application of an electromagnetic pump to the resonant portion 9, the frequencies of the first mode a and the second mode b may be effectively shifted (e.g. Stark shifted) due to the presence of a static potential or dynamical interaction. However, the skilled person would be well aware of characterising such effective frequencies, and for simplicity herein, by the first mode a and the second mode b "having" respective resonant frequencies $f_a$ and $f_b$, it will be understood as static meaning "un-dressed" frequencies or shifted "dressed" frequencies when in the presence of a dynamical interaction, depending on the situation.

Figure 2 illustrates an embodiment in which a single qubit-hosting structure 6 is arranged to perform the parametric dissipative stabilization to stabilize a cat qubit (i.e. a cat-qubit-hosting structure 6), wherein the non-linear element 7 is an ATS. An ATS is an inductive dipole element formed by a pair of Josephson junctions (indicated by the crosses and $E_J$ label in Figure 2) being shunted by an inductance (indicated by the $E_L$ label in Figure 2). The inductance may be formed for instance from a linear array of Josephon junctions. The Josephson junctions are each arranged on a different superconducting path such that they each form a distinct loop with the inductance, such that the ATS can be viewed as two superconducting loops connected by the shared edge which comprises the inductance. The ATS is thus sensitive to the magnetic flux threaded through each of the two loops.

The at least one resonant portion 9 is coupled via a linear coupler 15 to the ATS 7 which acts as an inductive element, such that the first mode a and the second mode b participate in the ATS 7. Example of embodiments for the linear networks which form the at least one resonant portion are known. For instance, among these embodiments, the non-linear superconducting quantum circuit 3 can be a two-mode hybridized system (also known as "galvanic cat", for which the Applicant has filed patent application EP22306815.6 and EP22306816.4) for which two lumped modes couple strongly via the ATS.

It is known to the skilled person that an ATS can be used to engineer in general a 2-to-1 boson conversion, i.e. the first term $a^2$ of the jump operator $L_2^{\alpha}$, in order to perform a parametric dissipative stabilization More particularly, a 2-to-1 photon conversion between the first mode a and the second mode b is obtained by parametrically pumping the ATS at the frequency $f_p = |2f_a - f_b|$, as successfully shown by Lescanne, Raphaël, et al. "Exponential suppression of bit-flips in a qubit encoded in an oscillator." Nature Physics 16.5 (2020): 509-513. Advantageously, the pump frequency satisfies $f_p \gg g_2$ to make this parametric pumping work as well as possible.

It is known to the skilled person that, in the case of the non-linear element 7 being an ATS 7, when biased at its flux working point also known as the "saddle point" (0 - $\pi$, namely 0 flux threaded through one of the loops and $\pi$ flux in unit of the flux quantum threaded through the other of the loops), the Hamiltonian of the ATS 7 has the following "sin-sin" form:

$$H_{ATS} = -2E_J \sin\big(\varphi_\Sigma(t)\big) \sin(\varphi) + \frac{E_L}{2}\big(\varphi - \varphi_\Delta(t)\big)^2,$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering electromagnetic radiations through flux lines of the ATS 7 out of phase, the latter can be implemented by delivering electromagnetic radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos(2\pi f_p t)$, the non-linear resonant part of the Hamiltonian writes in the rotating frame:

$H_{ATS} = (E_J\varepsilon_{2ph}\varphi_a^2\varphi_b/2) * (a^2 b^\dagger + \text{h. c.})$, which is typically the two-to-one photon exchange Hamiltonian needed to engineer the two-photon stabilization.

When an external DC magnetic field is set such that a $0 \bmod 2\pi$ magnetic flux threads one of the loop and a $\pi \bmod 2\pi$ flux threads the other loop, it is ensured that the ATS Hamiltonian has its "sin-sin" form. For clarity, the set-up applying the external DC magnetic field is not drawn on Figure 1 but can be applied via the two bottom mutual inductances of the ATS 7. A typical implementation consists in interleaving a bias-tee connected to a DC current source to input DC current into the system while letting the electromagnetic radiations go through. As will be described below, the components which generate the required magnetic fields are current-carrying flux bias lines close to the ATS 7.

The cat-qubit-hosting structure 6 comprises a further signal generator in the form of an electromagnetic source 17 which is set-up to modulate the common flux in the ATS 7. For this purpose, a electromagnetic network 19 is used to split the radiation emitted by the electromagnetic source 17 and apply it to each node of the ATS 7 with the correct phase. Alternatively, two different electromagnetic sources could be used, each being simply coupled to a single node of the ATS 7 and their relative phase and amplitude being set so as to achieve the desired flux modulation.

When the electromagnetic source 17 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 21 via a linear coupler 23 and a electromagnetic filter 25 configured as a band pass filter with a frequency $f_b$.

Alternatively, the electromagnetic filter 25 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 21.

Alternatively, it may be configured as a low-pass (respectively high-pass) filter if $f_a > f_b$ (resp $f_b > f_a$). In other embodiments, the electromagnetic filter 25 can be omitted when coupling between the load 21 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a electromagnetic source 13 set at frequency $f_b$.

In the above, the load 21 can be seen as part of the command circuit 5 of figure 2, while the linear coupler 23 and the electromagnetic filter 25 can be seen as part of the non-linear superconducting quantum circuit 3.

The command circuit 5 of cat-qubit-hosting structure 6 may further comprise signal-generators in the form of a electromagnetic source 11 and a electromagnetic source 27. In addition to stabilizing the cat qubit, the command circuit 5 also enables measurement an observable of the cat qubit or application of a quantum gate to the cat qubit.

The electromagnetic source 11 may be arranged to drive the first mode a by delivering electromagnetic radiation at the frequency $f_a$ to the linear electromagnetic network b/a. Such a drive of the first mode a causes the non-linear superconducting quantum circuit 3 to engineer a Hamiltonian $H_z$ expressed as $H_z/\hbar = \epsilon_z a + \text{h. c.}$, where the complex rate $\epsilon_z$ results from the amplitude and phase of the drive of the first mode a.

An additional signal generator in the form of another electromagnetic source may be set-up, in addition to the electromagnetic source 17, to contribute to the modulation of the common flux in the ATS 7. The additional electromagnetic source may be arranged to deliver electromagnetic radiation for causing the non-linear superconducting quantum circuit 3 to engineer a Hamiltonian. For instance, such a Hamiltonian may yield a so-called longitudinal coupling term between the first mode a and the second mode b, which may be used to apply a Z gate.

The electromagnetic source 27 is set-up to modulate the differential flux in the ATS 7 through the electromagnetic network 19. The electromagnetic source 27 can be used to reduce spurious Hamiltonian terms induced by the additional electromagnetic source. It is to be noted that the electromagnetic network 19 is used for convenience but can be omitted and the electromagnetic source 27 and any additional electromagnetic source could be applied directly to both nodes of the ATS 7, their relative phase and amplitude being set so as to achieve the desired flux modulation.

For the sake of completeness, it may also be noted that the electromagnetic source 27 can be used, instead of the electromagnetic source 13, to deliver electromagnetic radiation at a frequency $f_b$ to the linear electromagnetic network b/a to drive the second mode b.

Typically, the circuit has flux lines through which radiation can be delivered to provide (and optionally modulate) the common flux (herein also referred to as $\varphi_\Sigma$ or "sigma flux") and provide (and optionally modulate) the differential flux (herein also referred to as $\varphi_\Delta$ or "delta flux"). These are generally referred to as the two bias modes. As such, the flux lines may deliver both a DC-bias (setting the working point described above by applying DC current to thread the ATS loops with the relevant magnetic fluxes) and an RF-bias (superposed modulation to permit the time-dependent magnetic flux terms to "pump" the ATS as discussed above).

Finally, detector 8 is shown as being connected to the electromagnetic source 13 which delivers electromagnetic radiation at a frequency $f_b$ to the linear electromagnetic network b/a. Thus, as will be appreciated, a single line (e.g. transmission line) may be used to both input electromagnetic radiation and output a continuous signal. In this case, the continuous signal is output from the second mode b. In particular, the detector 8 may be configured for heterodryne detection of the fluorescence from the second mode b. As will be appreciated, other implementations of the detector is possible, for instance it could primarily be coupled for detection of the first mode a.

As will be appreciated, the qubit-hosting structure of Figure 2 is just one specific example, and variations thereof may be conceived for dissipatively stabilizing a cat qubit. For instance, the non-linear element 7, which is an ATS in Figure 2, may be replaced by a three-wave mixing non-linear element 7, which may for instance be formed by at least one loop including a first Josephson junction, a central inductive element and a second Josephson junction which are configured such that when a predetermined current of a constant intensity is applied by a current source (which is a signal generator replacing the electromagnetic sources 17,27 and the electromagnetic network 19 of Figure 2), the resonant frequency $f_b$ is substantially equal to twice the resonant frequency $f_a$. Such a three-wave mixing non-linear element and the associated superconducting circuit (and variations thereof) are described in EP21306965.1 filed by the Applicant. Other alternatives of the qubit-hosting structure may be used, such as that comprising a DC voltage-biased Josephson junction, as described in EP 23306839.4 and Aissaoui, Thiziri, et al. "A cat qubit stabilization scheme using a voltage biased Josephson junction." arXiv preprint arXiv:2411.08132 (2024).

## Characterization or control method

The present Inventors have developed a method for characterizing or controlling a quantum system 1, whether it be comprised of a single quantum-state-hosting structure or multiple quantum-state-hosting structures such as those outlined in the above embodiments, and which crucially operates as a non-linear dynamical system.

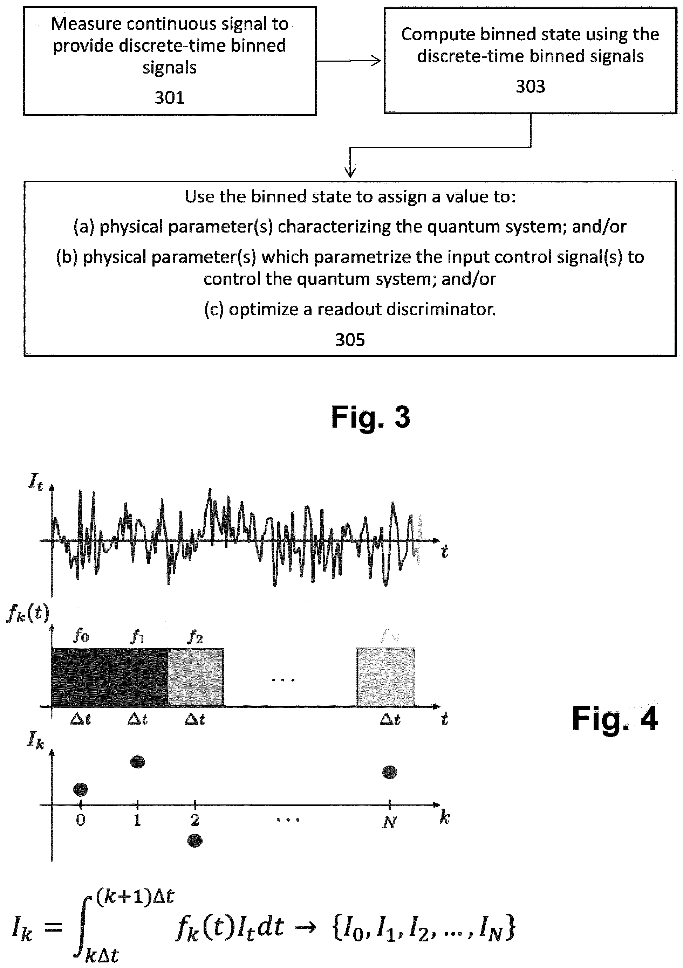

Figure 3 shows a flow diagram of the method steps for characterizing a quantum system 1 which is operable as an open quantum dynamical system, for instance as described above in relation to Figures 1-2. It is noted here that the present invention can be used to characterize or control any open quantum system which is continuously measured. That is, the quantum system 1, although typically (and indeed preferably) non-linear for many applications, need not necessarily be non-linear. Ergo, the quantum system may not comprise a non-linear element 7 in some embodiments.

The evolution of a continuously measured quantum system is modelled by the stochastic master equation (SME) formalism. The SME describes the evolution of the quantum state and the corresponding signal $It$ measured by the observer at time $t$. Specifically, an observer describes the state of an open quantum system 1 by a mixed quantum state, the density matrix $\rho_t$ at time $t$. Mathematically, we associate with the system a Hilbert space $\mathcal{H}$ of dimension $n_{\mathcal{H}}$ (possibly infinite), and the quantum state is a Hermitian positive semi-definite operator with unit trace: $p \in \Omega_{\mathcal{H}} = \{p \in \mathcal{H}, \rho \geq 0, Tr[\rho]$ = 1\}. Different laws of evolution describe the trajectory of the quantum state $\{\rho\}_{t \in [0,T]}$ in state space $\Omega_{\mathcal{H}}$. In the Markovian scenario there are two situations: if the observer cannot observe the quantum systems composing the environment, the state trajectory is described by the Lindblad master equation (ME). Conversely, if the observer measures these external degrees of freedom, the state trajectory is governed by the stochastic master equation (SME).

The ME describes the evolution of the average state $\bar{\rho}_t \rho t$ when the observer does not monitor the environment, for example for a purely dissipative process or for unread measurements. The evolution is deterministic, it is described by the linear ordinary differential equation (ODE): $d\bar{\rho}_t/dt = \mathcal{L}_t(\bar{\rho}_t) = -i[H_t, \bar{\rho}_t] + \sum_{k=1}^{N} \mathcal{D}_{L_{k,t}}(\bar{\rho}_t)$, where $\mathcal{L}_t$ is the Liouvillian superoperator, $H_t$ is the Hamiltonian of the system, $\mathcal{D}_L(\rho) = L\rho L^\dagger - (1/2)L^\dagger L\rho - (1/2)\rho L^\dagger L$ is the standard dissipator and $\{L_{1,t}, ..., L_{N,t}\}$ is a collection of jump operators.

For simplicity, we consider in the following a single loss channel with time-independent loss operator $L$. In some situations, this loss channel is fully or partially measured by the observer. The acquired information can be used to update the system state, which gives a better (less mixed on average) description of the state trajectory than the ME. This is precisely the purpose of the SME.

The SME describes the evolution of the state $\rho_t$ when the observer continuously measures the loss channel with a detector. The evolution is non-deterministic, it is described by the non-linear stochastic differential equation (SDE): $dp_t = \mathcal{L}_t(\rho_t)dt + \mathcal{M}_L(\rho_t, dY_t)$, where $\mathcal{M}_L$ is a superoperator which depends on a stochastic process $dY_t$: the measured signal. The first part of the equation is the deterministic Lindblad update. The second part models the stochastic back-action of the measurement, which is taken into account continuously, at each time.

The detector output is a continuous-time signal defined by the rate of change of the stochastic process $dY_t$ over time: $It = dY_t/dt$. The path followed by the quantum state over time is entirely determined by this measured signal: each time the observer performs a new experiment (labelled $j$), they measure a particular realisation of the stochastic signal $\left\{I_t^{(j)}\right\}_{t\in[0,T]}$, which corresponds to a unique trajectory $\left\{\rho_t^{(j)}\right\}_{t\in[0,T]}$ in state space. These trajectories are called quantum trajectories, and the state $\rho_t$ is said to be conditioned on the information measured by the observer up to time $t$.

There are two main types of SMEs: the jump SME and the diffusive SME. The difference lies in the type of detector: if the output is binary (0 or 1), the evolution is described by the jump SME, and otherwise if the output takes a continuous range of values, the evolution is described by the diffusive SME. For example, in quantum optics, the jump SME models photodetection, while the diffusive SME models homodyne or heterodyne detection. Mathematically, they differ by the stochastic process $dY_t$ involved, and the form of the measurement back-action superoperator $\mathcal{M}_L$.

For the jump SME, most of the time the detector detects nothing and outputs 0, and sometimes, upon detection, the detector clicks, and outputs 1. This stochastic process is modelled by the point process $dYt = dN_t$ with law: $\mathbb{P}[dN_t = 0] = 1 - \mathbb{P}[dN_t = 1]$, and $\mathbb{P}[dN_t = 1] = \left(\theta + \eta Tr[L\rho_t L^\dagger]\right)dt$, where here $\theta \geq 0$ is the dark count rate (taking into account false clicks), and $0 < \eta \leq 1$ is the detector efficiency (taking into account missed clicks). The measured signal $It = dNt/dt$ is the rate of change of the counting process $N_t = \int_0^t dN_t$, which counts the number of jumps occurring in the time interval $[0, t)$. The measurement back-action is defined by: $\mathcal{M}_L(\rho, dN) = \left(\frac{\theta\rho + \eta L\rho L^\dagger}{\theta + \eta Tr[L\rho L^\dagger]} - \rho\right)(dN - (\theta + \eta Tr[L\rho L^\dagger])dt)$, as described for instance in Rouchon, Pierre. "A tutorial introduction to quantum stochastic master equations based on the qubit/photon system." Annual Reviews in Control 54 (2022): 252-261.

For the diffusive SME, the detector output is real-valued, and continuous in time. This stochastic process is given by the Itô process $dYt$ defined by: $dYt = \sqrt{\eta}Tr[(L + L^\dagger)\rho_t]dt + dW_t$, where again $0 < \eta \leq 1$ is the detector efficiency (taking into account measurement imperfections), and $W_t$ is a Wiener process taking independent Gaussian distributed increment. The measurement back-action is defined by: $\mathcal{M}_L(\rho, dY) = \sqrt{\eta}(L\rho + \rho L^\dagger - Tr[(L + L^\dagger)\rho]\rho)(dY - \sqrt{\eta}Tr[(L + L^\dagger)\rho]dt)$, as described for instance in Jacobs, Kurt, and Daniel A. Steck. "A straightforward introduction to continuous quantum measurement." Contemporary Physics 47.5 (2006): 279-303.

In the jump SME case, the quantum trajectory is discontinuous: the state evolves continuously in state space as long as the detector detects nothing, but upon detection it undergoes a sudden jump. In the diffusive SME case, the state evolves continuously in state space, following a Brownian motion-like trajectory. The unconditioned trajectory described by the ME is recovered by averaging over all possible realisations of the stochastic process driving the SME (or equivalently, over all possible quantum trajectories or measured signals): $\bar{\rho}_t = \mathbb{E}[\rho_t]$. Here $\mathbb{E}$ denotes the statistical average over $N_t$ or $W_t$. Note that although the quantum trajectories described by the jump SME and the diffusive SME are very different in nature, the average state trajectory does not depend on the stochastic process averaged over (jump or diffusive).

As will be appreciated, the above continuous-time formulations for the ME and SME can be readily converted into a discrete-time formulation suitable for numerically simulation, for instance via using the well-known Kraus operators formulation.

As such, the evolution of quantum system 1 can be modelled by a SME, and specifically the initial state, the form the Hamiltonian and the various jump operators entering the dissipator. The skilled person would be well aware of how to provide such a model for a particular quantum system 1. Importantly, the model of a quantum system 1 is typically known apart from the values of p parameters corresponding to various static or dynamical terms, which can be gathered in a

vector $\boldsymbol{\theta_{true}} \in \mathbb{R}^p$. These parameters may appear in different parts of the model, such as the initial state, Hamiltonian, jump operators, dark counts or efficiencies, physical parameters which parameterizes the control signals from the signal generator(s) 11,13, or even filter functions as described in more detail below. Herein the notation {...} may also be used to denote a set of values or parameters which can be conceptually (that is mathematically or numerically) gathered in a vector.

The dynamics of quantum system 1 is thus describable via a stochastic master equation having a plurality of physical parameters $\theta_{true}$.

However, as mentioned in above, the continuous signal $I_t$ in relation to the SME is never available to the operator of quantum system 1, it is merely a mathematical object, and not a tangible, measurable quantity. It can be loosely thought of as a series of Dirac delta distributions for the jump SME, and as white noise with a trend for the diffusive SME, and this continuous-time signal is referred to as the sharp signal herein.

The actual measured signal is processed by an acquisition chain consisting of amplifiers, filters and digitisation components (e.g. an analogue-to-digital converter, ADC, or a photocounter) generally comprised by detector 8. This chain converts the continuous-time sharp signal $It$ into a discrete-time signal $\{I_0, ... , I_N\}$. Each value $I_k$ is defined by integrating $It$ against the transfer function $f_k$ of the acquisition chain for the $k$-th time bin: $I_k = \int f_k(t)I_t dt$. The only quantity available to the experimentalist is this discretised measurement record $\{I_0, ..., I_N\}$. It is particularly important to take this filtering into account when the digitisation time is not negligible compared to the system timescales, as is often the case for superconducting circuits, for example.

The digitisation is usually performed by averaging the signal over a duration $\Delta t$ (a time bin), which is longer than the bandwidth of the various acquisition chain components. In embodiments, the filter function for the $k$-th time bin can then be approximated by a rectangular window $f_k$ of duration $\Delta t$.

In the case of the jump SME, the detector typically gives the number of click events over a given time interval, and the filter function $f_k = \mathbb{1}_{[k\Delta t,(k+1)\Delta t)}$ is the indicator function defined by $\mathbb{1}_\Omega(t) = 1$ if $t \in \Omega$ and $\mathbb{1}_\Omega(t) = 0$ otherwise, wherein [...) defines the half-open interval such that x $\in$ [0,1) means $0 \le x < 1$. The resulting signal takes discrete values $I_k \in \mathbb{N}$: $I_k = \int_{k\Delta t}^{(k+1)\Delta t} I_t dt = N_{[k\Delta t,(k+1)\Delta t)}$ where the counting process $N_{[t_1,t_2)} = \int_{t_1}^{t_2} dN_t$ counts the number of jumps occurring in the time interval $[t_1,t_2)$. In the limit where there is at most one jump per time bin $\Delta t$, the signal is binary $I_k \in \{0,1\}$, it is just a sequence of 0s and 1s: 00100010..., and the filtering accounts for the inevitably finite time resolution of the detector.

In the case of the diffusive SME, the signal is typically averaged over some duration $\Delta t$, the filter function is $f_k = \left(\frac{G}{\Delta t}\right)\mathbb{1}_{[k\Delta t,(k+1)\Delta t)}$ with G the gain of the acquisition chain. The resulting signal is continuous-valued $I_k \in \mathbb{R}$: $I_k = (G/\Delta t)\int_{k\Delta t}^{(k+1)\Delta t} I_t dt$ $Itdt$. We note here that there is a choice in the initial enumeration of k. For instance, if the initial time bin is mathematically designated by $k = 0$, the integral for $I_k$ goes from $k\Delta t$ to $(k + 1)\Delta t$. However, if the initial time bin is instead designated by $k = 1$, then integral for $I_k$ goes from $(k - 1)\Delta t$ to $k\Delta t$, which is entirely equivalent under translation of $k$. Hereon in, we will typically take the initial time bin as being designated by $k = 1$, although any alternative designation of the initial time bin can of course be defined under the appropriate translation in $k$.

In both cases, we call this digitised signal the binned signal. From a practical point of view, this discrete-time signal $I_k$ is the only quantity available to the operator of quantum system 1.

Thus, in a first step 301, the detector 8 coupled to the at least one qubit-hosting structure 6 is used to physically measure the continuous signal from quantum system 1 to provide a plurality of digitized discrete-time binned signals $\{I_1, ..., I_k\}$ up to time $t = k\Delta t$, wherein $k$ is an integer denoting the $k$-th time bin of the detector.

This digitisation process is illustrated in Figure 4 for the diffusive SME, wherein the filtering and digitisation of the sharp diffusive signal $It$ against the rectangular window filter functions $f_k$ in Figure 4 results in a discrete-time binned signal $\{I_1, ..., I_k\}$.

Returning to Figure 3, in a second step 303, a new object describing the quantum system is computed, which is referred to as the "binned state", using the discrete-time binned signal $\{I_1, ... , I_K\}$.

Specifically, the binned state $\bar{\rho}_k$ is computed at time $t = k\Delta t$, defined by:

$$\bar{\rho}_k = \mathbb{E}[\rho_{k\Delta t}| I_1, ..., I_k].$$

As will be appreciated, this formulation is similar to the form of the ME recovered by averaging over all possible realisations of the stochastic process driving the SME described above: $\bar{\rho}_t = \mathbb{E}[\rho_t]$ . Indeed, it is the exact same average on the stochastic process (quantum trajectories) $\rho_t$, except that this averaging is conditioned on the integral of the modelled continuous signal being what was observed. Phrased differently, the averaging is performed only over the states $\rho$ that are consistent with the observations (i.e. the measurement record of the discrete-time binned signal $\{1, \dots, I_k\}$), not on all possible values of $\rho$. This estimate is the best Bayesian estimate of the state from the observer's point of view, it is the quantum state as usually defined by textbooks, but crucially taking into account of only the information actually acquired by the observer.

As an example, lets consider the binned state $\bar{\rho}_1$ and corresponding discrete-time binned signal $I_1$ for the first time bin $k = 1$. All that is known is the value of $I_1$, such that the integral of possible continuous signals (i.e. trajectories from the SME) must equal this value, $I_1 = \int_0^{\Delta t} I_t dt$ , where the filter function is the indicator function as defined above and all parameters of the acquisition chain have been set to unity. The binned state is thus

$$\bar{\rho}_1 = \mathbb{E}_{\{I_t\}_{0 \leq t \leq \Delta t}} \left[ \rho_t(\{I_t\}_{0 \leq t \leq \Delta t}) \middle| \int_0^{\Delta t} I_t dt = I_1 \right] = \lim_{J \to \infty} \frac{1}{J} \Sigma_{j=1}^J \rho_{\Delta t}^{(j)} \quad \text{where the only} \quad \rho_{\Delta t}^{(j)} \text{, kept in the sum}$$

are those having a signal which satisfies the condition $\int_0^{\Delta t} I_t dt = I_1$ .

Generally then, the binned state $\bar{\rho}_k$ is the average of a plurality of solutions $\rho_{k\Delta t}$ of the stochastic master equation at time $t = k\Delta t$ each for different possible continuous signals wherein, for each of the plurality of solutions $\rho_{k\Delta t}$, the value of the possible continuous signal integrated over a given time bin is substantially equal to the discrete-time binned signal for said given time bin.

The present inventors have further discovered numerically efficient schemes for computing the binned state $\bar{\rho}_k$.

In particular, the binned state $\bar{\rho}_k$ at step $k$ knowing $\{I_1, \dots, I_k\}$ is determined by an iterative scheme, starting from the initial state $\bar{\rho}_0 = \rho_0$ (which is known, either from a theoretical model or from an initial experimental characterization, such as an initial state tomography), which takes the following iterative form:

$$\bar{\rho}_k = \frac{\mathcal{K}_k(\bar{\rho}_{k-1})}{\text{Tr}[\mathcal{K}_k(\bar{\rho}_{k-1})]}.$$

Here, $\mathcal{K}_k$ is a completely positive update map, a type of object which is well known in the art. In this case, $\mathcal{K}_k$ only depends on the measurement result $I_k$ at step k:

$$\mathcal{K}_k = \frac{1}{2\pi} \int dp e^{ipI_k} \exp_{(k-1)\Delta t}^{k\Delta t} \left( \mathcal{L}^{-ip\mathbb{1}_k} \right),$$

with $\mathcal{L}^{-ip\mathbb{1}_k}$ a so-called generating Liouvillian $\mathcal{L}^j$ defined for a function

$$j = -ip\mathbb{1}_k$$

either by: (i) $\mathcal{L}_t^j = \mathcal{L}_t + (e^{j_t} - 1)\mathcal{C}_L$ for the jump SME, or (ii) $\mathcal{L}_t^j = \mathcal{L}_t + j_t\mathcal{C}_L + j_t^2/2 \, \mathcal{I}$ for the diffuse SME with $\mathcal{I}$ the identity superoperator, and where $\mathcal{L}_t$ is the standard Liouvillian entering the SME describing the dynamics of the quantum system. Here,

$$\mathcal{C}_L(O)$$

is the correlation superoperator for an operator $O$, and is defined either by: (i)

$$\mathcal{C}_L(O) = \theta O +$$

$$\eta L O L^\dagger$$

for the jump SME, or (ii)

$$\mathcal{C}_L(O) = \sqrt{\eta}(LO + OL^\dagger$$

) for the diffuse SME, wherein the notations take the same forms as defined above. As will be appreciated, we can have many jump operators, but may have only one that we measure, which is the measured jump operator L entering the definitions of the correlation superoperator. Of course, there may also be many measured jump operators (e.g. specially in the case of many detectors) - the "measured jump operator" should be interpreted as a single measured jump operator, or a plurality of measured jump operators, depending on the situation.

Here, $\exp_{(k-1)\Delta t}^{k\Delta t}(\mathcal{O})$ denotes the time-ordered exponential of the superoperator $\mathcal{O}$ (i.e. the generating Liouvillian $\mathcal{L}^{-ip\mathbb{1}_k}$, which is a superoperator, to be applied on the operator $\overline{\rho}_{k-1}$ to evaluate $\mathcal{K}_k(\overline{\rho}_{k-1})$).

The update map $\mathcal{K}_k$ here is itself not trace-preserving, however dividing by its trace Tr[$\mathcal{K}_k(\overline{\rho}_{k-1})$] ensures that the overall state update $\overline{\rho}_k = \frac{\mathcal{K}_k(\overline{\rho}_{k-1})}{\text{Tr}[\mathcal{K}_k(\overline{\rho}_{k-1})]}$ is a completely positive trace-preserving map.

Namely, operator $\rho_0$ is the density matrix describing the initial state of quantum system 1 (and operators $\overline{\rho}_1, \overline{\rho}_2,...,$ $\overline{\rho}_k$ etc. are the subsequently iteratively determined binned states at those time bins), $\theta$ is the dark count rate, $\eta$ is the detector efficiency, and L is loss or jump operator (which can be time-independent or take different forms at different times). The generating Liouviliian, correlation superoperators, and generating density matrix (introduced below), are rigorously described at least in: (i) P. Guilmin P. Rouchon, and A. Tilloy, "Correlation functions for realistic continuous quantum measurement." IFAC-PapersOnLine 56.2 (2023): 5164-5170; and (ii) P. Guilmin, P. Rouchon, and A. Tilloy, "Parameters estimation by fitting correlation functions of continuous quantum measurement," arXiv preprint, no. 2410.11955, 2024, doi: 10.48550/ARXIV.2410.11955.

Thus, the binned state $\overline{\rho}_k$ is calculated iteratively by first setting the initial state as $\overline{\rho}_0 = \rho_0$ at time $t = 0$. The map $\mathcal{K}_1$ is then applied to $\overline{\rho}_0$, such that the next state at the $k = 1$ time bin is thus calculated via $\overline{\rho}_1 = \frac{\mathcal{K}_1(\overline{\rho}_0)}{\text{Tr}[\mathcal{K}_1(\overline{\rho}_0)]}$. The map $\mathcal{K}_2$ is then be applied to $\overline{\rho}_1$ such that the next state $\overline{\rho}_2$ is calculated via $\overline{\rho}_2 = \frac{\mathcal{K}_2(\overline{\rho}_1)}{\text{Tr}[\mathcal{K}_2(\overline{\rho}_1)]}$, and so on iteratively up to the k-th time bin to provide $\overline{\rho}_k$.

Here, we provide a short derivation of this iterative form for determining the binned state, wherein for simplicity we consider only a single loss channel with a time-independent jump operator $L$, a single signal from the detector 8, and simple signal filter function as described in examples above $f_k = \mathbb{1}_k$.

The main ingredient is the aforementioned is the so-called generating density matrix at time $t$ is given by $\rho_t^j = \mathbb{E}\left[\exp\left(\int_0^t j_{t'} dY_{t'}\right)\rho_t\right]$ and $dY_{t'} = I_t dt'$ (obtainable as shown in appendix S1 of the P. Guilmin et. al. reference (ii) cited above).

The generating density matrix at time $t$, $\rho_t^j$, obeys the so-called generalised quantum master equation $d\rho_t^j/dt = \mathcal{L}_t^j(\rho_t^j)$, where $\mathcal{L}_t^j$ is the aforementioned generating Liouvillian, which is a superoperator.

Formally, the solution of $d\rho_t^j/dt$ is given by $\rho_t^j = \exp_0^t(\mathcal{L}_t^j)(\rho_0)$, wherein the notation $\exp_0^t(f)$ denotes the time-ordered exponential of function f between initial time 0 and time t. In other works, the time-ordered exponential is sometimes written using the time-ordering symbol $\mathfrak{T}$: $\exp_0^t(f) = \mathfrak{T}\exp\left(\int_0^t f_s ds\right)$.

It will then be appreciated that for the constant function

$$j = \alpha\mathbb{1}_k$$

where $\alpha \in \mathbb{C}$, the generating density matrix is given by $\rho_t^{\alpha\mathbb{1}_k} = \mathbb{E}[e^{\alpha I_k}\boldsymbol{\rho}_t]$. Accordingly, by "massaging" conditional

probabilities, we have:

$$\bar{\rho}_k = \mathbb{E}[\boldsymbol{\rho}_{k\Delta t} \mid I_1, \dots, I_k],$$

$$\bar{\rho}_k = \mathbb{E}[\boldsymbol{\rho}_{k\Delta t} \mid I_k, \bar{\rho}_{k-1}],$$

$$\bar{\rho}_k = \frac{\mathbb{E}[\delta(I_k - \boldsymbol{I}_k)\boldsymbol{\rho}_{k\Delta t} \mid \bar{\rho}_{k-1}]}{\mathbb{E}[\delta(I_k - \boldsymbol{I}_k) \mid \bar{\rho}_{k-1}]},$$

where the conditional probability formula has been used $\mathbb{P}[A \mid B, C] = \mathbb{P}[A \cap B \mid C]/P[B \mid C]$. We thus condition over a signal that is either discrete-valued for the jump SME: $I_k \in \mathbb{N}$, such that $\delta$ denotes the Kronecker delta function, or continuous-valued for the diffusive SME: $I_k \in \mathbb{R}$, such that $\delta$ denotes the Dirac delta function.

The conditioning on the signal value $I_k$ can be connected with the aforementioned generating density matrix using the inverse Fourier transform of the $\delta$ function: $\delta(x) = \frac{1}{2\pi} \int \mathrm{d}p\, e^{ipx}$, where the bounds of the integral are $-\pi$ to $\pi$ for the jump SME (and $\delta$ is the Kronecker delta function) and $-\infty$ to $\infty$ for the diffusive SME (and $\delta$ is the Dirac delta function). In the below, the bounds of the integral are herein temporarily dropped for notational simplicity.

The numerator of $\bar{\rho}_k = \frac{\mathbb{E}[\delta(I_k - \boldsymbol{I}_k)\boldsymbol{\rho}_{k\Delta t}\mid\bar{\rho}_{k-1}]}{\mathbb{E}[\delta(I_k - \boldsymbol{I}_k)\mid\bar{\rho}_{k-1}]}$, denoted $\tilde{\rho}_k$, can be evaluated as follows:

$$\begin{aligned} \tilde{\rho}_k &= \mathbb{E}[\delta(I_k - \boldsymbol{I}_k)\boldsymbol{\rho}_{k\Delta t} \mid \bar{\rho}_{k-1}] \\ &= \frac{1}{2\pi} \mathbb{E}\Big[\int \mathrm{d}p\, e^{ip(I_k - \boldsymbol{I}_k)} \rho_{k\Delta t} \mid \bar{\rho}_{k-1}\Big] \\ &= \frac{1}{2\pi} \int \mathrm{d}p\, e^{ipI_k} \mathbb{E}\big[e^{-ipI_k} \rho_{k\Delta t} \mid \bar{\rho}_{k-1}\big] \\ &= \frac{1}{2\pi} \int \mathrm{d}p\, e^{ipI_k} \rho_{k\Delta t}^{-ip\mathbb{1}_k}, \end{aligned}$$

where

$$\rho_{k\Delta t}^{-ip\mathbb{1}_k}$$

is the generating density matrix defined above for

$$j = -ip\mathbb{1}_k$$

and initial value $\bar{\rho}_{k-1}$ at time $t = (k-1)\Delta t$. Thus, by using the above solution of $d\rho_t^j/dt$, namely $\rho_t^j = \exp_0^t(\mathcal{L}_t^j)(\rho_0)$, we retrieve the above formulation of

$$\tilde{\rho}_k =$$

$$\frac{1}{2\pi} \int \mathrm{d}p\, e^{ipI_k} \exp_{(k-1)\Delta t}^{k\Delta t} \big(\mathcal{L}^{-ip\mathbb{1}_k}\big)(\bar{\rho}_{k-1}).$$

.

The integral to evaluate the application of $\mathcal{K}_k$ to $\bar{\rho}_{k-1}$ can be computed accurately using an efficient numerical quadrature, for example with Gaussian quadratures. Computing $\mathcal{K}_k(\bar{\rho}_{k-1})$ exactly (to machine precision) typically requires evaluating the integrand for a few tens of values of $p$. For each value of $p$, the numerical cost is the same as solving the ME (Lindblad master equation). Using vectorized-array computations, we can compute multiple values of $p$ simultaneously, which reduces the numerical cost of the iterative scheme $\mathcal{K}_k$ to that of solving only a single ME for the same quantum system 1.

As will be appreciated, quadratures are an exemplary method to approximate integrals by summing a few values of the integrand at specific points: $\int f(x)dx \approx \sum_{i=0}^{d} w_i f(x_i)$ where $d$ is the number of quadrature points, $w_i$ are the quadrature weights, and $x_i$ are the quadrature points.

Explicitly, for the jump SME, the bounds of the integral are $-\pi$ to $\pi$, such that we have:

$$\mathcal{K}_k = \frac{1}{2\pi} \int_{-\pi}^{\pi} \mathrm{d}p\, e^{ipI_k} \exp_{(k-1)\Delta t}^{k\Delta t} \left( \mathcal{L} + \left( e^{-ip} - 1 \right) \mathcal{C}_L \right),$$

with like terms taking the same definitions as provided above. For example, one can use the so-called Gauss-Legendre quadrature to compute this integral numerically exactly.

Explicitly, for the diffusive SME, the bounds of the integral are $-\infty$ to $\infty$, such

$$\mathcal{K}_k = \frac{1}{2\pi} \int_{-\infty}^{\infty} \mathrm{d}p\, e^{ipI_k - \frac{\Delta t}{2}p^2} \exp_{(k-1)\Delta t}^{k\Delta t} \left( \mathcal{L} - ip\mathcal{C}_L \right),$$

that we have with like terms taking the same definitions as provided above. For example, one can use the so-called Gauss-Hermite quadrature to compute this integral numerically exactly. Note that the $e^{-p^2}$ factor of the quadrature is natively present in this map.

Moreover, in practice, the Liouvillian may be vectorized to compute these time-ordered exponentials. As this may be undesirably costly for large Hilbert space, so in practice one may only compute the actions of superoperators on states, without every materializing the superoperators. Said otherwise, only $\mathcal{K}_k \left( \bar{\rho}_{k-1} \right)$ is computed, and never $\mathcal{K}_k$ .

The present Inventors have also discovered that the above expressions for $\mathcal{K}_k \left( \bar{\rho}_{k-1} \right)$ may be computed approximately in a perturbative manner.

For instance, taking the example of the diffuse SME, wherein $\mathcal{K}_k \left( \bar{\rho}_{k-1} \right) =$

$$\frac{1}{2\pi} \int_{-\infty}^{\infty} \mathrm{d}p\, e^{ipI_k - \frac{\Delta t}{2}p^2} \exp_{(k-1)\Delta t}^{k\Delta t} \left( \mathcal{L} - ip\mathcal{C}_L \right)(\bar{\rho}_{k-1}),$$

when $\Delta t$ is smaller than the other time scales involved in the dynamics (but not infinitely smaller), one can expand the second (time-ordered) exponential and retain only terms up to a certain order in $\Delta t$. Crucially, the binned signal $I_k$ should be typically of order $\sqrt{\Delta t}$ at least for sufficiently small windows (after which the growth is linear). Moreover, it is noted that integrals of the form $\mathcal{I}_k := \frac{1}{2\pi} \int \mathrm{d}p\, p^k \mathrm{e}^{ipI_k - \frac{\Delta t}{2}p^2}$ are of order $1/(\Delta t)^{k/2}$. This means that the term of order $p\Delta t$ in the time-ordered exponential behaves as a term of order $\sqrt{\Delta t}$ and thus should be expanded to higher order.

Accordingly, as an example, Taylor expanding the appropriate exponential and ordering contributions with their power of $\Delta t$ up to second order in $\Delta t$ (and identifying and using the relevant Gaussian integral identities), we have:

$$\widetilde{\mathcal{K}}_k = \frac{e^{-i_k/2}}{\sqrt{2\pi\Delta t}} [\mathcal{J} + \sqrt{\Delta t}^1 i_k \mathcal{C}_L$$

$$+\sqrt{\Delta t}^2 \left(\mathcal{L} - \frac{1-i_k^2}{2}\mathcal{C}_L^2\right)$$

$$+\sqrt{\Delta t}^3 \left(\frac{I_k(i_k^2-3)}{6}\mathcal{C}_L^3 + \frac{I_k}{2}(\mathcal{C}_L\mathcal{L} + \mathcal{L}\mathcal{C}_L)\right)$$

$$+\sqrt{\Delta t}^4 \left(\frac{i_k^4 - 6i_k^2 + 3}{24}\mathcal{C}_L^4 + \frac{i_k^2-1}{6}(\mathcal{C}_L^2\mathcal{L} + 2\mathcal{C}_L\mathcal{L}\mathcal{C}_L + \mathcal{L}\mathcal{C}_L^2) + \frac{1}{2}\mathcal{L}^2\right)]$$

where the notation $i_k = I_k/\sqrt{\Delta t}$ has been used for simplicity, and the like-terms take their respective forms defined above for the diffuse SME. As will be appreciated, to compute this numerically, there is no need to compute any more expensive integrals, rather each term of the sum may be simply computed. Thus, the binned state can be computed perturbatively, as shown in the above non-limiting example.

As will be appreciated, the above formulations for $\mathcal{K}_k$ may be generalized to condition on multiple signals, or multiple values of the same signal. That is, the above formulae may be generalised to compute the binned state from signals from different detectors (or multiple signals from the same detector, for instance if continuously measuring the quantum system 1 in a steady state, the same signal can be segmented into a plurality of sub-signals), that can be of jump and/or diffusive type.

Thus, to condition on $N$ signals in the above coming from detectors ($d_1, ..., d_N$), or indeed a single detector with the signal partitioned into $N$ sub-signals, $j$ is now a set of test functions, one for each signal $j = \{j_n\}_{n\in[\![1,N]\!]}$, with $N$ the number of measured signals. Splitting detectors between those of jump-type $n \in S_{jump}$ and those of diffusive-type $n \in S_{diffusive}$, the new generator of the ODE $d\rho_t^j/dt = \mathcal{L}_t^j(\rho_t^j)$ described above is:

$$\mathcal{L}_t^j = \mathcal{L}_t + \sum_{n\in S_{jump}} (e^{j_{n,t}} - 1)\mathcal{C}_{L_{d_n},t} + \sum_{n\in S_{diffusive}} \left(j_{n,t}\mathcal{C}_{L_{d_n}} + \frac{j_{n,t}^2}{2}\mathcal{J}\right),$$

where like notations take the same definitions as before. Thus, the generating density matrix for multiple functions $j = \{j_1, ..., j_N\}$ is:

$$\rho_t^j = \mathbb{E}\left[\prod_{n=1}^N \exp\left(\int_0^t j_{n,s} \mathrm{d}Y_s\right) \boldsymbol{\rho}_t\right].$$

The above form for the binned state is then straightforward to extend to conditioning on multiple signals. For example, for detector $d_1$ with binned signal ($I_1, ..., I_k$) and detector $d_2$ with binned signal ($J_1, ..., J_k$), where the change of notation to $J$ here is merely to distinguish the second detector signals, then:

$$\bar{\rho}_k = \mathbb{E}[\boldsymbol{\rho}_{k\Delta t} \mid (I_1, ..., I_k), (J_1, ..., J_k)]$$

$$\bar{\rho}_k = \mathbb{E}[\boldsymbol{\rho}_{k\Delta t} \mid I_k, J_k, \bar{\rho}_{k-1}]$$

$$\bar{\rho}_k = \frac{\mathbb{E}[\delta(I_k - I_k)\delta(J_k - J_k)\boldsymbol{\rho}_{k\Delta t} \mid \bar{\rho}_{k-1}]}{\mathbb{E}[\delta(I_k - I_k)(J_k - J_k) \mid \bar{\rho}_{k-1}]}.$$

Here for simplicity, the time bins $\Delta t$ and initial times are assumed the same for both detectors. Now using the inverse Fourier transform for each $\delta$ in the numerator of $\bar{\rho}_k$, denoted $\overline{\rho}_k$:

$$\tilde{\rho}_k = \mathbb{E}[\delta(I_k - \boldsymbol{I}_k)\delta(J_k - \boldsymbol{J}_k)\boldsymbol{\rho}_{k\Delta t} \mid \bar{\rho}_{k-1}]$$

$$= \left(\frac{1}{2\pi}\right)^2 \mathbb{E}\left[\iint dpdq e^{ip(I_k - \boldsymbol{I}_k)}e^{iq(J_k - \boldsymbol{J}_k)}\boldsymbol{\rho}_{k\Delta t} \mid \bar{\rho}_{k-1}\right]$$

$$= \left(\frac{1}{2\pi}\right)^2 \iint dpdq e^{ipI_k}e^{iqJ_k}\mathbb{E}\left[e^{-ip\boldsymbol{I}_k}e^{-iq\boldsymbol{J}_k}\boldsymbol{\rho}_{k\Delta t} \mid \bar{\rho}_{k-1}\right]$$

$$= \left(\frac{1}{2\pi}\right)^2 \iint dpdq e^{ipI_k}e^{iqJ_k}\rho^j_{k\Delta t}.$$

where $\rho^j_{k\Delta t} = \rho^{(-ip\mathbb{1}_k, -iq\mathbb{1}_k)}_{k\Delta t}$ is the aforementioned generating density matrix for multiple functions $j = (-ip\mathbb{1}_k, -iq\mathbb{1}_k)$ and initial value $\bar{\rho}_{k-1}$ at the time $t = (k - 1)\Delta t$. Finally, the new completely positive map $\mathcal{K}_k$ only depends on the measurement results $I_k$ and $J_k$ at step $k$:

$$\mathcal{K}_k = \left(\frac{1}{2\pi}\right)^2 dpdq e^{ipI_k}e^{ipJ_k}\exp^{k\Delta t}_{(k-1)\Delta t}\iint (\mathcal{L}^j),$$

with $\mathcal{L}^j$ the above generating Liouvillian for multiple signals for $j = (-ip\mathbb{1}_k, -iq\mathbb{1}_k)$.

Accordingly, for N detectors (or same detector at different time durations) $(d_1, ..., d_N)$, each with discrete-time binned signals $(I_{1,k}, ..., I_{N,k})$ at step $k$ (where the first index numerates the detectors or signals), we have:

$$\mathcal{K}_k = \left(\frac{1}{2\pi}\right)^N \int ... \int dp_1 ... dp_N \left(\prod_{n=1}^{N} e^{ipI_{n,k}}\right)\exp^{k\Delta t}_{(k-1)\Delta t}(\mathcal{L}^j),$$

with $\mathcal{L}^j$ the above generating Liouvillian for multiple signals for $j = (-ip_1\mathbb{1}_k, ..., -ip_N\mathbb{1}_k)$.

For example, for detectors $(d_1, d_2)$ and measured signals $(I_k, J_k)$ at step $k$, for the SME of jump type we have:

$$\mathcal{K}_k = \left(\frac{1}{2\pi}\right)^2 \int_{-\pi}^{\pi} dp \int_{-\pi}^{\pi} dq e^{ipI_k}e^{iqJ_k} \exp^{k\Delta t}_{(k-1)\Delta t}\left(\mathcal{L} + \left(e^{-ip} - 1\right)\mathcal{C}_{L_{d_1}} + \left(e^{-iq} - 1\right)\mathcal{C}_{L_{d_2}}\right),$$

whereas for the SME of diffusive type we have:

$$\mathcal{K}_k = \left(\frac{1}{2\pi}\right)^2 \int_{-\infty}^{\infty} dp \int_{-\infty}^{\infty} dq e^{ipI_k - \frac{\Delta t}{2}p^2}e^{iqJ_k - \frac{\Delta t}{2}q^2} \exp^{\Delta t}_{(k-1)\Delta t}\left(\mathcal{L} - ip\mathcal{C}_{L_{d_1}} - iq\mathcal{C}_{L_{d_2}}\right).$$

The generalisation is useful when multiple signals are measured, to perform simulation with adaptive time stepping (where one needs to sample an intermediate signal value with the correct statistics), or for filtering functions that overlap over different time-bin, and introduce some superficial memory effect.

The present Inventors have further recognised that the map $\mathcal{K}_k$ may also be used to give the probability of acquiring a discrete-time binned signal $I_k$ knowing the previous binned state $\bar{\rho}_{k-1}$ via:

$$\mathbb{P}[I_k \mid \bar{\rho}_{k-1}] = \mathrm{Tr}[\mathcal{K}_k(\bar{\rho}_{k-1})].$$

This result is particularly useful for numerical simulations and to optimize quantum state readout protocols.

That is, if we want to simulate a trajectory from scratch, one would need to sample $I_k$ with the correct statistics. This is enabled by using the above calculated probability of acquiring a discrete-time binned signal $I_k$ knowing the previous binned state $\bar{\rho}_{k-1}$, $\mathbb{P}[I_k \mid \bar{\rho}_{k-1}]$.

As an example, using the above perturbative expansion of $[\mathcal{K}_k(\bar{\rho}_k)]$, one finds:

$$\mathbb{P}[I_k \mid \bar{\rho}_{k-1}] = \left(1 + AI_k + BI_k^2 + CI_k^3 + DI_k^4\right)\frac{\mathrm{e}^{-I_k^2/(2\Delta t)}}{\sqrt{2\pi\Delta t}},$$

where $A$, $B$, $C$, and $D$ are simply the traces of the terms of the corresponding order in $I_k$ the above perturbative expression. Thus, one can simply precompute $A$, $B$, $C$, and $D$ and then sample from this probability distribution, yielding a simulated $I_k$, which can thus subsequently be used to simulate $\bar{\rho}_k$ (as if we had physically measured $I_k$). This may provide a better numerical discretisation of the SME than the existing schemes (which typically chooses a numerical discretisation time and evolves the state with a discretized scheme, for example a Euler scheme, which is only valid for negligibly small discretisation times).

Regarding optimizing quantum state readout protocols, as an example, conventional readout protocols are optimized based on the assumption that the probability density of the time-integrated signal (acquired via observing the state in the superconducting readout resonator) is explicitly Gaussian in form. This yields a simple formula for the readout fidelity (the so-called signal-to-noise ratio, SNR). However, it has been recognized that this assumption is not always valid, for instance for fast readout protocols, where the readout resonator state is driven strongly.

Using the binned state, and also the probability of discrete time signal $I_k$ based on the preceding binned state $\mathbb{P}[I_k \mid \bar{\rho}_{k-1}]$, the exact probability density of the time-integrated signal (i.e. the discrete-time binned signal) for a given initial state. The present Inventors have discovered that this allows for refining the SNR (which is just an approximation of the fidelity) and thereby finding the optimal physical parameters (i.e. which parametrizes the input control signal(s) from the signal generator(s) 11,13) for a readout protocol. Crucially, this optimization of a readout protocol is valid even when the final signal distribution is not Gaussian, which is particularly relevant as decay errors occurring during the typically long readout durations contributes to the distortion of the distribution to non-Gaussian forms. For instance, so-called T1 decay errors during the readout result in the excited state being mis-identified as the ground state (e.g. for typical discrete-level qubits such as a transmon wherein the excited state is one computational state and the ground state is the other computational state). The time-averaged signal distribution for the excited state is not gaussian, but bimodal with a small part centered within the gaussian which corresponds to the time-averaged ground state signal.

Returning again to Figure 3, in a third step 305, the binned state $\bar{\rho}_k$ is used for a subsequent purpose, either to numerically reconstruct the state, to extract values of physical parameters of the quantum system 1, or to determine the physical parameters for subsequent physical operations.

For instance, the binned state $\bar{\rho}_k$ may be used to either: (a) characterize the quantum system 1; and/or (b) determine physical parameter values for input control signal(s) from the signal generator(s) 11,13 to physically control the dynamics of the quantum system 1 (i.e. in subsequent time); and/or (c) optimize a readout discriminator of a quantum state readout protocol of the quantum state 1.

For instance, generally, it is expected that each physical parameter of the quantum system 1 has a unique impact on the evolution of the state, and therefore on the measured signals. To estimate (possible simultaneously) the $p$ parameters $\{\theta\}$, first the plurality of digitized discrete-time binned signals $\{I_1, ..., I_k\}$ is measured. As the physical parameters enter the Liouvillian $\mathcal{L}(\theta)$ and/or the measurement back-action $\mathcal{M}_L(\theta)$ of the SME, the binned state is inherently also a function of the physical parameters $\bar{\rho}_k(\theta)$. Thus, one may numerically fit the binned state $\bar{\rho}_k(\theta)$ to the plurality of digitized discrete-time binned signals $\{I_1, ..., I_k\}$ to assign a value to the $p$ parameters $\{\theta\}$, for example with a least-squares method. The result is a vector of parameters $\theta_{fit}$ that minimises the difference between the experimental results and the binned states.

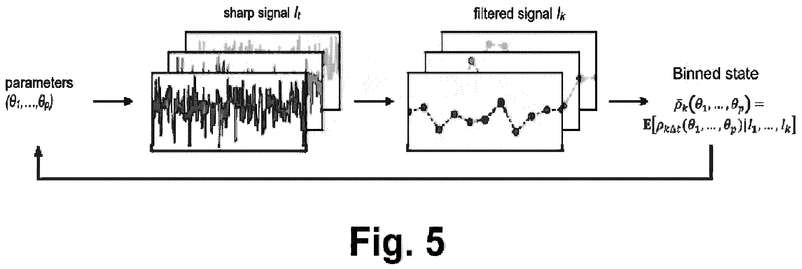

Figure 5 illustrates this method for extracting physical parameters. Approximative or exact formulae may be used to compute the binned states, as discussed in above.

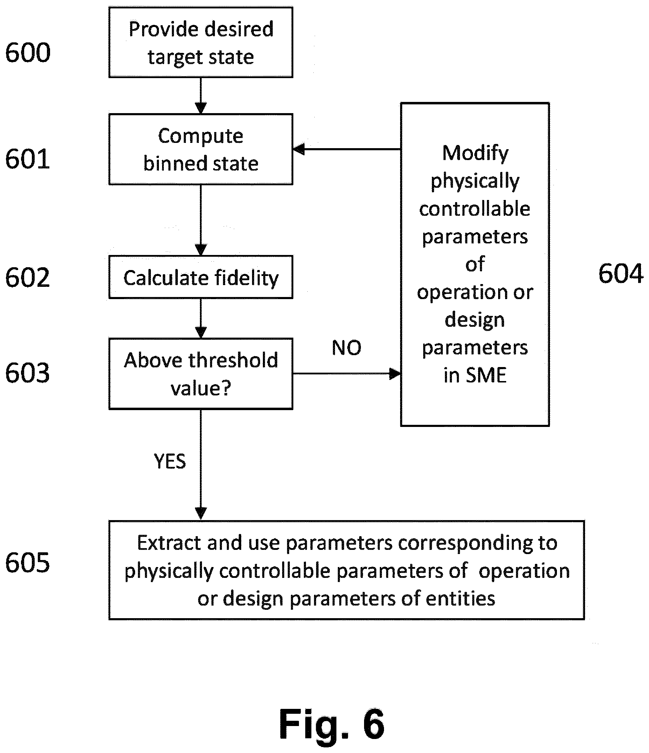

Figure 6 shows a method for determining values for physical parameters which parametrizes the input control signal(s) of signal generator(s) 11,13 to physically control the dynamics of the quantum system 1.

For instance, at step 600, a desired final (target) state is provided. At step 601, the binned state is determined from the measurement record of discrete-time binned signals as described herein (i.e. for an initial operation for optimization to be performed on quantum state 1 having at least approximately known physical parameters or for a known operation to be performed on quantum state 1 having initial physical parameters for optimization).

At step 602, a fidelity between the target state and the binned state is calculated, which may generally be used to define a loss function $f_{Loss}$. The loss function $f_{Loss}$ typically depends on one or more target operating attributes $X_{target}$ to be reached by the quantum system 1, but can also depend on some intermediate stage of the dynamics. Typically, the target operating attribute $X_{target}$ is a target quantum state $\rho_{target}$ or a target quantum unitary $U_{target}$ to be reached by the quantum system. For instance, a possible objective is to prepare a target quantum $\rho_{k\Delta t}^{target}$ - for instance a Fock state with five photons $\rho_{k\Delta t}^{target} = |5\rangle\langle 5|$ reached by time $t = k\Delta t$. In such a case, the following loss function $f_{Loss}$ can be built:

$$f_{Loss}\left(\rho_{k\Delta t}^{target},\theta\right) = 1 - F(\rho_{k\Delta t}^{target},\bar{\rho}_k(\theta))$$ , where: $F$ is the fidelity between two quantum states.

The fidelity is a known measure of mathematical distance between two quantum states, and more particularly between two density operators. The fidelity between two density operators $\rho$ and $\sigma$ is commonly defined as follows: $F(\rho,\sigma)$

$= (\mathrm{tr}\sqrt{\sqrt{\rho}\sigma\sqrt{\rho}})^2$ . Consequently, the previous loss function $f_{Loss}$ can be seen as a measure how different the binned

quantum state $\overline{\rho}_k(\theta)$ defined by the p-dimensional parameter vector $\theta$ and the target state $\rho_{k\Delta t}^{target}$ are from each other. By minimizing $f_{Loss}$, we bring the experimental state closer to the target state.

As mentioned above, a different objective can also be to prepare a target quantum unitary $U_{target}$. Such a target quantum unitary $U_{target}$ can be defined as a mapping from a set of initial quantum states $\left\{\rho_1^i,\dots,\rho_m^i\right\}$ to a set of respective target quantum states $\left\{\rho_1^t,\dots,\rho_m^t\right\}$ (i.e. a quantum gate). This mapping can be written as follows for every

$l \in \llbracket 1,m\rrbracket : \rho_l^t = U_{target}\rho_l^i U_{target}^\dagger$ . In such a case, the following loss function $f_{Loss}$ can be built:

$$f_L\left(U_{target},\theta\right) = m - \sum_{l=1}^m F\left(U_{target}\rho_l^i U_{target}^\dagger, U(\theta)\rho_l^i U(\theta)^\dagger\right)$$ . Preparing a target quantum state or a target quantum unitary are common objectives. However, it is known to the skilled person that other objectives can be achieved and that other target operating attributes can be defined.

Thus, with the loss function defined, a local minimum $\{\theta_{min}\}$ of the loss function within the space of physical control parameters of the input control signals may be determined.

One way may be, for instance, to compare the calculated fidelity with a threshold value, as shown at step 603. If the fidelity is below the threshold value, then the physically controllable parameters of operation (namely the set of physical parameters which parametrizes the input control signal(s)) are modified in SME in step 604. The binned state is computed once again 601, and the subsequent fidelity is calculated once again 602, and compared with the threshold value in step 603. The steps 601-604 are repeated until a calculated fidelity is above the threshold value, in which case in step 605 the parameters of the final iteration, corresponding to physically controllable parameters of the operation, are extracted and used as the set of physical parameters of the input control signal(s) in a subsequent control operation of the quantum system.

The fidelity may be given as the overlap between the approximated final state and desired final state. The threshold may be between 0.7 (70%) and 1 (100%). For instance, the threshold may be chosen such that the fidelity between the approximated final state and the desired final state is above 0.8, preferably above 0.9, and most preferably above 0.99. Moreover, as will be appreciated, modifying parameters between successive iterations of choices of SME may use any known optimization algorithm, such as gradient descent.

Finally, the binned state may also be used to optimize the discriminator in readout protocols of the quantum system 1 (e.g. qubit readout protocols when the quantum-state-hosting structure 6 is for hosting qubits).

For instance, in the example of the above cat qubits, when preparing the cat state in the parity state $s = |\mathcal{C}^\pm\rangle$ and performing a measurement (i.e. state readout) operation, the acquired plurality of digitized discrete-time binned signals $S_i$ $= \{I_1, \dots, I_k\}$ during the readout operation will follow a distribution $\mathcal{S}_s$ in the space of signal traces (where $i$ denotes the iteration of the measurement). Thus, we can define a signal trace (the discrete-time binned signals) by the set of $k$ complex values it took at the corresponding $k$ time steps. So the signal trace space is $U = \mathbb{C}^n$ .

A single-shot signal trace discriminator is a function $f$ of the signal trace space to a binary output set {'+','-'} which takes a single-shot signal trace as an input, and returns a measurement label, in our case '+' or '-', as an output. The discriminator can be seen as a binary partition of the signal trace space.

For each prepared state (in our case $s = |\mathcal{C}^\pm\rangle$) the associated discriminator error $\varepsilon_s := P(f(S) \neq 's'|s)$ is defined as the probability that the signal trace $S$, which follows the random distribution $\mathcal{S}_s$ in the space of signal traces, gets discriminated to an output label $f(S)$ which does not correspond to the prepared state $s$. The mean error of the discriminator $f$ is defined as $(\varepsilon_+ + \varepsilon_-)/2$.

For a given measurement process, there is a single discriminator function $f_{opt}$ that minimizes the mean discriminator error. This optimal discriminator is defined as

$$f_{opt}(S) = \begin{cases} '+' & \text{if } g_+(S) > g_-(S) \\ '-' & \text{otherwise} \end{cases},$$

where $g_s$ is the probability density function of a random variable following the probability distribution $\mathcal{S}_s$.

The binned state can be used to find the optimal discriminator by computing, for a specific choice of system and control parameters, the exact value of the probability density function $g_+$ and $g_-$ for the digitized discrete-time signal measured experimentally. The system and control parameters can then be optimized numerically to find the discriminator with the optimal fidelity $f_{opt}(S)$.

**Numerical examples**

As discussed above, by preparing and measuring the quantum system 1..., certain parameters can be more precisely and/or accurately fit as opposed to conventional methods relying entirely on the SME as the model with which to compare experimental data.

For example, let's consider a qubit with Hamiltonian $H = \frac{1}{2}\sigma_x + \frac{1}{2}\sigma_y$ and a single jump operator $L = \sigma_-$. We consider that the jump operator is measured with perfect diffusive continuous measurement of $L$ (with $\eta = 1.0$), and we simulate the system evolution for $t \in [0, T]$ with $T = 2.0$ and starting from initial state $\rho_0 = |e\rangle\langle e|$.

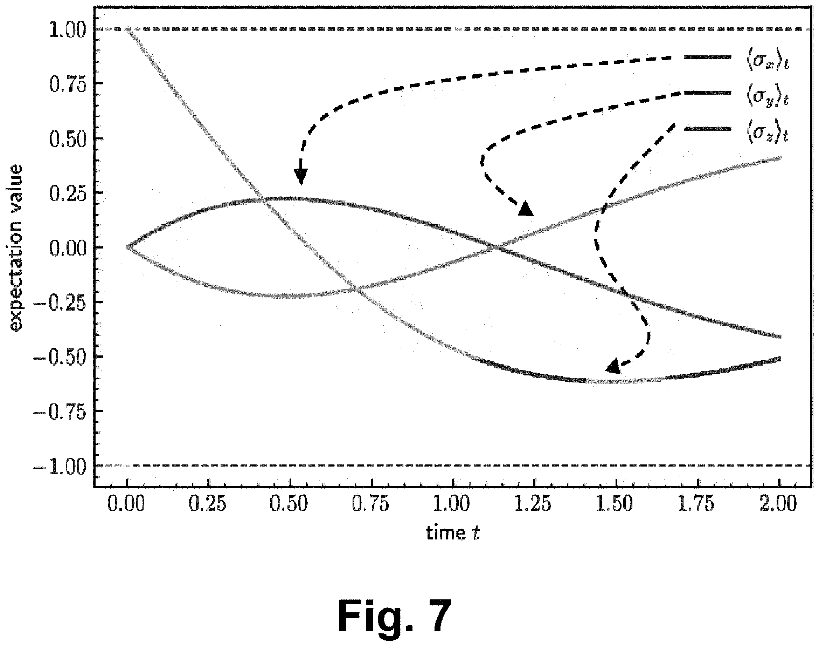

We can plot the average Lindblad evolution by showing the expectation value of all Pauli matrices, as shown in Figure 7.

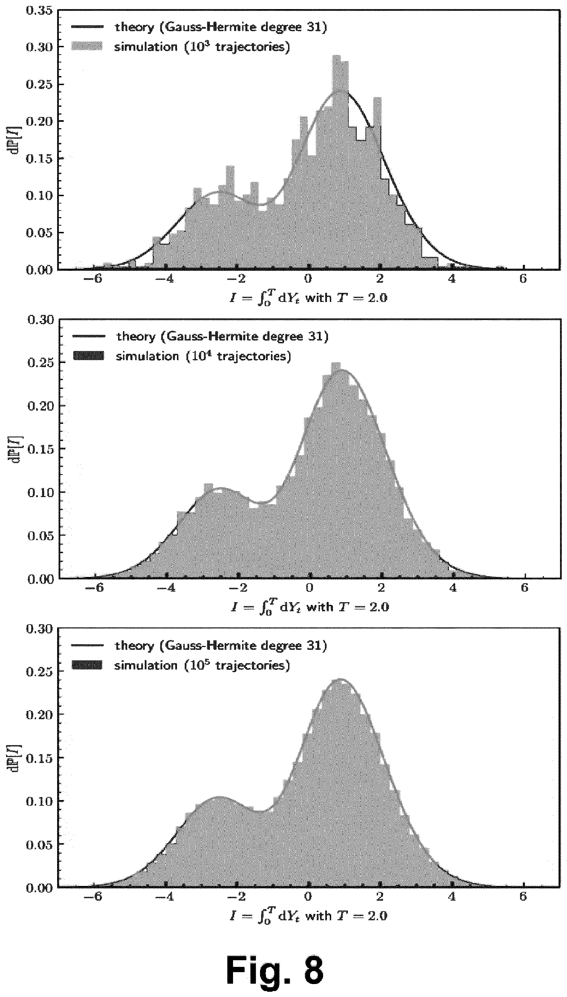

If we are interested in the probability distribution of the signal averaged over a long time $I = \int_0^T dY_t$, one option is to simulate many SME trajectories with a finely grained time-step, then averaging the simulated signal between [0, T] for each trajectory, and group the results by their value to estimate the probability distribution with an imperfect histogram. But using the binned state, we can directly compute the exact probability of the signal without simulating any trajectory. In Figure 8, we compare for this qubit system the estimated density probability (for 1000, 10,000 and 100,000 simulated trajectories) with the exact probability computed with the binned state.

Here, the "theory" curve in Figure 8 has been computed in double precision (float64), i.e. 101 points (x axis) where for each point we compute a degree 31 quadrature takes 0.5ms on a CPU (using vectorized computation).

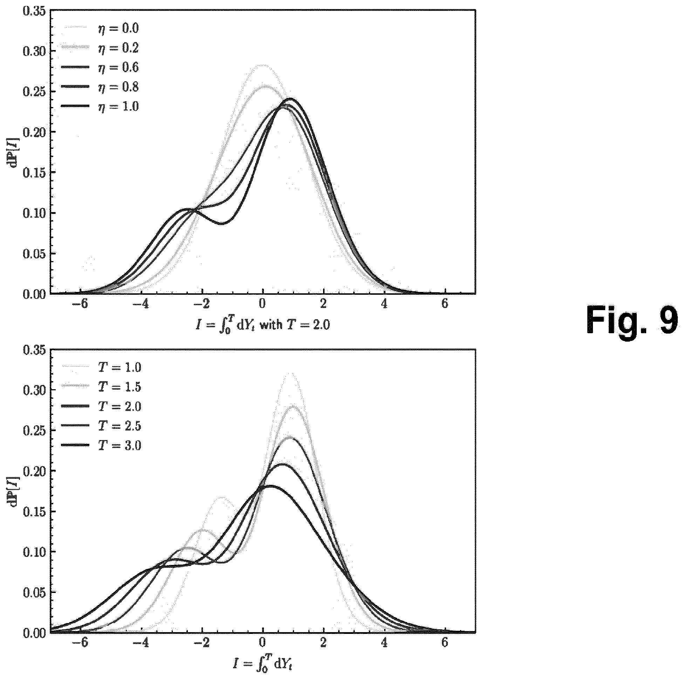

Now, we can also plot the theoretical probability distribution for various values of $\eta$, as shown in the upper panel of Figure 9. This can be used to numerically fit the value of the efficiency, by comparing the measured experimental distribution with the theory prediction, e.g. using a simple least-squares method. More generally, any parameter that has an impact on the time-averaged signal probability distribution can be fitted using this method.

We can also study the probability distribution for various values of the integration time T, shown in the lower panel of Figure 9.

As another numerical example, let's consider the reduced system for the dissipative cat qubit (e.g. a system as described above in relation to Figure 2), after adiabatic elimination of the buffer. We consider the so-called "deflate" protocol, where the buffer drive is turned off, and the memory state empties through the buffer. The Hamiltonian is $H = 0$ and there is a single jump operator $L = a^2$. We consider that the jump operator is measured with imperfect diffusive continuous measurement of $L$ (with $\eta = 0.5$), which corresponds to homodyne measurement of the buffer along the X quadrature, and we simulate the system evolution for $t \in [0, T]$ with $T = 2.0$ and starting from initial state a coherent state with $\alpha = 3$.

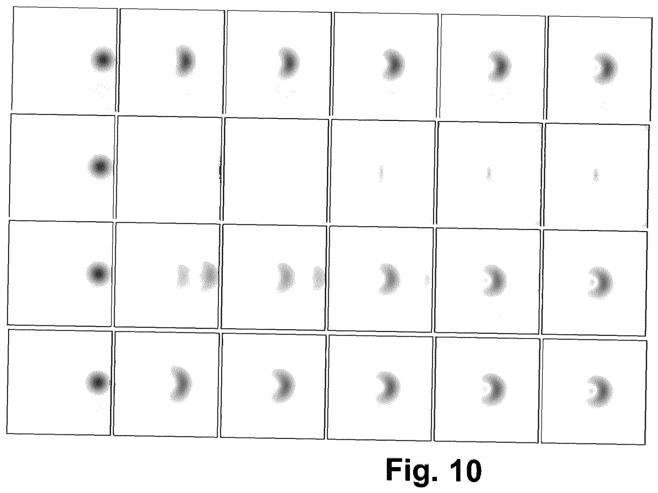

We can plot the average Lindblad evolution by showing the state Wigner at various times, in the upper panel of Figure 10.

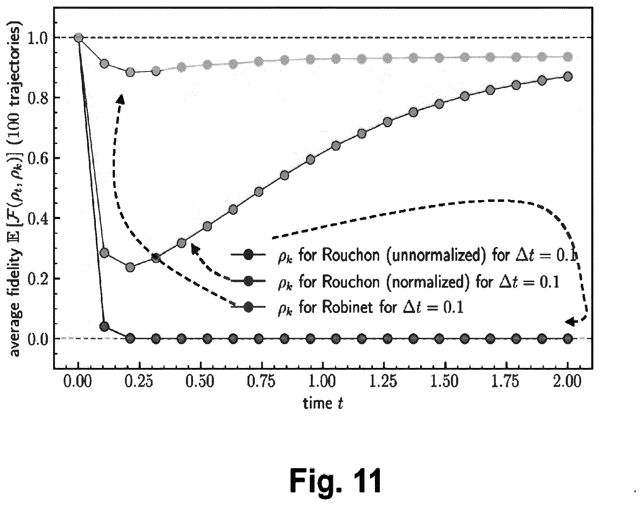

We then propose to compare the existing schemes to reconstruct the system state from a measurement record. To do so, we simulate the SME evolution for a state $\rho_t$ with a very fine-grained $\delta t = 10^{-3}$, we then integrate the corresponding signal over time bins of duration $\Delta t = 0.1$, and try to reconstruct the system's state $\rho_k$ from this integrated signal, with a Rouchon unnormalized scheme (CP to machine precision but TP to order one, just renormalised with the trace which is the wrong projection, comparable to the Euler scheme), the Rouchon normalized scheme (CPTP up to machine precision), or with the proposed binned state. We repeat this process for 100 trajectories, and compare (on average over these 100 trajectories) the fidelity of the state reconstructed from the integrated signal $\rho_k$ (for each numerical scheme) with the true state $\rho_t$. There are 20 time bins of duration $\Delta t \in [0, T]$, so we have 20 states to compare. References for Rouchon schemes can be found in "A tutorial introduction to quantum stochastic master equations based on the qubit/photon system" cited above. The results are shown in Figure 11.

As can be seen, the fidelity of reconstruction is much higher for Robinet (>=0.9) than the two other schemes, especially at short time where the deflate dynamics is fast compared to the digitization timescale.

We can also compare the average state for each reconstruction. The Rouchon (unnormalized) state averaged over the 100 trajectories is shown in the second panel of Figure 10. As can be seen, the unnormalized Rouchon scheme the states makes no sense, it's completely false.

The Rouchon (normalized) state averaged over the 100 trajectories is shown in the third panel of Figure 10. The normalized Rouchon scheme gives a physically meaningful state, but the evolution is quite far from the correct evolution, and reaches a fidelity as low as 0.25 for small times.

The Robinet state averaged over the 100 trajectories is shown in the lower-most panel (fourth) of Figure 10. The Robinet reconstructed state is relatively close to the true state. It has a lower average purity, but this is expected as we lost some information compared to the true state trajectory.

As one can see, all the previous existing numerical methods used to reconstruct the system's state from the measurement record fail when the digitization time is not negligible. The fidelity between the binned state and the "true" system state (for a very finely grained signal) is not one, but this is expected as we lost some information when averaging the signal. The binned state is the best prediction one can make on the system's state given the digitized measurement signal.

**Claims**

1. A method of characterizing or controlling a quantum system, wherein the dynamics of the quantum system is describable via a stochastic master equation having a plurality of physical parameters, and wherein the quantum system comprises: (i) one or more quantum-state-hosting structure(s); (ii) a detector coupled to at least one of the quantum-state-hosting structure(s) and configured to measure a continuous signal output from the quantum-state-hosting structure(s) to provide a measurement signal from the quantum system, wherein the detector is configured to digitize the continuous signal over time bins of duration $\Delta t$; and (iii) one or more signal generator(s) coupled to the at least one of the quantum-state-hosting structure(s) and configured to input control signal(s) to physically control the dynamics of the quantum system, the method comprising:

   (I) physically measuring, with the detector, a continuous signal from the quantum system to provide a plurality of digitized discrete-time binned signals $\{I_1, ..., I_k\}$ up to time $t = k\Delta t$, wherein $k$ is an integer denoting the $k$-th time bin of the detector;

   (II) computing a binned state of the quantum system at time $t = k\Delta t$, $\overline{\rho}_k = \mathbb{E}[\rho_{k\Delta t} \mid I_1, ..., I_k]$, wherein the binned state $\overline{\rho}_k$ is the average of a plurality of solutions $\rho_{k\Delta t}$ of the stochastic master equation at time $t = k\Delta t$ each for different possible continuous signals wherein, for each of the plurality of solutions $\rho_{k\Delta t}$, the value of the possible continuous signal integrated over a given time bin is substantially equal to the discrete-time binned signal for said given time bin; and
   (III) using the binned state $\overline{\rho}_k$ to:

      (a) assign a value to at least one of the plurality of physical parameters which characterizes the quantum system; and/or
      (b) assign a value to at least one of the plurality of physical parameters which parametrizes the input control signal(s) to physically control the dynamics of the quantum system; and/or
      (c) optimize a readout discriminator of a quantum state readout protocol.

2. The method of claim 1, wherein the detector has binary output with dark count rate $\theta \geq 0$ and detector efficiency and $0 < \eta \leq 1$, such that the stochastic master equation describing the dynamics of the quantum system is of the jump type, and wherein operation (II) comprises computing the binned state $\overline{\rho}_k$ by:

   (i) assigning an initial binned state $\overline{\rho}_0 = \rho_0$ at time $t = 0$ describing the initial state of the quantum system; and

   (ii) calculating the binned state of the quantum system at time $t = k\Delta t$ via the iterative formula $\overline{\rho}_k = \frac{\mathcal{K}_k(\overline{\rho}_{k-1})}{\mathrm{Tr}[\mathcal{K}_k(\overline{\rho}_{k-1})]}$,

   wherein $\mathcal{K}_k$ is a completely positive map and is given by $\mathcal{K}_k = \frac{1}{2\pi} \int_{-\pi}^{\pi} \mathrm{d}p\, e^{ipI_k} \exp_{(k-1)\Delta t}^{k\Delta t} \left( \mathcal{L} + \left( e^{-ip} - 1 \right) \mathcal{C}_L \right)$, wherein $\exp_{(k-1)\Delta t}^{k\Delta t}(\mathcal{O})$ denotes the time-ordered exponential of the superoperator $\mathcal{O}$, $\mathcal{L}$ is the Liouvillian of the stochastic master equation describing the quantum system, and $\mathcal{C}_L$ is the correlation superoperator defined for an operator $O$ by $\mathcal{C}_L(O) = \theta O + \eta L O L^\dagger$, with $L$ being the measured jump operator of the stochastic master equation describing the dynamics of the quantum system.

3. The method of claim 2, wherein the action of the completely positive map $\mathcal{K}_k$ on the binned state $\overline{\rho}_{k-1}$ at the $k$-th time

bin, $\mathcal{K}_k$ $(\bar{\rho}_{k-1})$, is computed using a numerical quadrature, and preferably using the Gauss-Legendre quadrature.

4. The method of claim 1, wherein the detector has an output taking a continuous range of values with detector efficiency and $0 < \eta \leq 1$, such that the stochastic master equation describing the dynamics of the quantum system is of the diffusive type, and wherein operation (II) comprises computing the binned state $\bar{\rho}_k$ by:

(i) assigning an initial binned state $\bar{\rho}_0 = \rho_0$ at time $t = 0$ describing the initial state of the quantum system; and

(ii) calculating the binned state of the quantum system at time $t = k\Delta t$ via the iterative formula $\bar{\rho}_k = \frac{\mathcal{K}_k(\bar{\rho}_{k-1})}{\mathrm{Tr}[\mathcal{K}_k(\bar{\rho}_{k-1})]}$,

wherein $\mathcal{K}_k$ is a completely positive map and is given by $\mathcal{K}_k = \frac{1}{2\pi} \int_{-\infty}^{\infty} \mathrm{d}p\, e^{ipl_k - \frac{\Delta t}{2}p^2} \exp_{(k-1)\Delta t}^{k\Delta t} (\mathcal{L} - ip\mathcal{C}_L)$, wherein $\exp_{(k-1)\Delta t}^{k\Delta t}(\mathcal{O})$ denotes the time-ordered exponential of the superoperator $\mathcal{O}$, $\mathcal{L}$ is the Liouvillian of the stochastic master equation describing the quantum system, and $\mathcal{C}_L$ is the correlation superoperator defined for an operator $O$ by $\mathcal{C}_L(O) = \sqrt{\eta}(LO + OL^{\dagger})$, with $L$ being the measured jump operator of the stochastic master equation describing the dynamics of the quantum system.

5. The method of claim 4, wherein the action of the completely positive map $\mathcal{K}_k$ on the binned state $\bar{\rho}_{k-1}$ at the $k$-th time bin, $\mathcal{K}_k$ $(\bar{\rho}_{k-1})$, is computed using a numerical quadrature, and preferably using the Gauss-Hermite quadrature.

6. The method of claim 1, wherein operation (II) comprises computing the binned state of the quantum system at time $t = k\Delta t$, $\bar{\rho}_k$, perturbatively.

7. The method of claim 6, wherein the detector has an output taking a continuous range of values with detector efficiency and $0 < \eta \leq 1$, such that the stochastic master equation describing the dynamics of the quantum system is of the diffusive type, and wherein computing the binned state of the quantum system perturbatively comprises:

(i) assigning an initial binned state $\bar{\rho}_0 = \bar{\rho}_0$ at time $t = 0$ describing the initial state of the quantum system;

(ii) calculating the binned state of the quantum system at time $t = k\Delta t$ via the iterative formula $\bar{\rho}_k = \frac{\mathcal{K}_k(\bar{\rho}_{k-1})}{\mathrm{Tr}[\mathcal{K}_k(\bar{\rho}_{k-1})]}$,

wherein $\mathcal{K}_k$ is a completely positive map and is given by using:

(a)

$$\mathcal{K}_k = \frac{e^{-i_k/2}}{\sqrt{2\pi\Delta t}} [\mathcal{J} + \sqrt{\Delta t}^1 i_k \mathcal{C}_L];$$

or
(b)

$$\mathcal{K}_k = \frac{e^{-i_k/2}}{\sqrt{2\pi\Delta t}} [\mathcal{J} + \sqrt{\Delta t}^1 i_k \mathcal{C}_L + \sqrt{\Delta t}^2 \left(\mathcal{L} - \frac{1-i_k^2}{2}\mathcal{C}_L^2\right)];$$

or
(c)

$$\mathcal{K}_k = \frac{e^{-i_k/2}}{\sqrt{2\pi\Delta t}} [\mathcal{J} + \sqrt{\Delta t}^1 i_k \mathcal{C}_L + \sqrt{\Delta t}^2 \left(\mathcal{L} - \frac{1-i_k^2}{2}\mathcal{C}_L^2\right) + \sqrt{\Delta t}^3 \left(\frac{I_k(i_k^2-3)}{6}\mathcal{C}_L^3 + \frac{I_k}{2}(\mathcal{C}_L\mathcal{L} + \mathcal{L}\mathcal{C}_L)\right)];$$

(d)

$$\mathcal{K}_k = \frac{e^{-i_k/2}}{\sqrt{2\pi\Delta t}} [\mathcal{I} + \sqrt{\Delta t}^1 i_k \mathcal{C}_L + \sqrt{\Delta t}^2 \left(\mathcal{L} - \frac{1-i_k^2}{2} \mathcal{C}_L^2\right) + \sqrt{\Delta t}^3 \left(\frac{I_k(i_k^2-3)}{6} \mathcal{C}_L^3 + \frac{I_k}{2}(\mathcal{C}_L\mathcal{L} +$$

$$\mathcal{L}\mathcal{C}_L)\right) + \sqrt{\Delta t}^4 \left(\frac{i_k^4-6i_k^2+3}{24} \mathcal{C}_L^4 + \frac{i_k^2-1}{6}(\mathcal{C}_L^2\mathcal{L} + 2\mathcal{C}_L\mathcal{L}\mathcal{C}_L + \mathcal{L}\mathcal{C}_L^2) + \frac{1}{2}\mathcal{L}^2)],$$

wherein $\mathcal{L}$ is the Liouvillian of the stochastic master equation describing the quantum system, and $\mathcal{C}_L$ is the correlation superoperator defined for an operator $O$ by $\mathcal{C}_L(O) = \sqrt{\eta}(LO + OL^\dagger)$, with $L$ being the measured jump operator of the stochastic master equation describing the dynamics of the quantum system, and $i_k = I_k/\sqrt{\Delta t}$.

**8.** The method of claim 1, the quantum system comprises a plurality of detectors each coupled to at least one of the quantum-state-hosting structure(s) and configured to measure continuous signals output from the quantum-state-hosting structure(s) to provide a plurality of measurement signal from the quantum system, wherein the detector is configured to digitize the continuous signal over time bins of duration $\Delta t$, the method comprising:

in operation (I), physically measuring, with the detectors, a plurality of continuous signals from the quantum system to provide a plurality $N$ of sets of digitized discrete-time binned signals $\{I_{n,1}, \ldots, I_{n,k}\}$ up to time $t = k\Delta t$, wherein $k$ is an integer denoting the k-th time bin of each detector, and wherein index $n \in [1; N]$ identifies each detector; and

in operation (II) computing the binned state $\overline{\rho}_k$ by:

(i) assigning an initial binned state $\overline{\rho}_0 = \rho_0$ at time $t = 0$; and
(ii) calculating the binned state of the quantum system at time $t = k\Delta t$ via the iterative formula $\bar{\rho}_k = \frac{\mathcal{K}_k(\bar{\rho}_{k-1})}{\text{Tr}[\mathcal{K}_k(\bar{\rho}_{k-1})]}$, wherein $\mathcal{K}_k$ is a completely positive map and is given by $\mathcal{K}_k = \left(\frac{1}{2\pi}\right)^N \int \ldots \int dp_1 \ldots dp_N \left(\prod_{n=1}^N e^{ipI_{n,k}}\right) \exp_{(k-1)\Delta t}^{k\Delta t}(\mathcal{L}^j)$, wherein $\int \ldots \int dp_1 \ldots dp_N$ denotes the multiple integral across variable $p_n$, wherein $\exp_{(k-1)\Delta t}^{k\Delta t}(\mathcal{O})$ denotes the time-ordered exponential of the superoperator $\mathcal{O}$, $\mathcal{L}^j$ is a generating Liouvillian superoperator depending on the binary or continuous outputs of each of the detectors.

**9.** The method of claim 1, wherein the dynamics of the quantum system is configured to be in a steady state, the method comprising:

in operation (I) physically measuring, with the detector, a plurality of sequential continuous signals from the quantum system to provide a plurality N of sets of digitized discrete-time binned signals $\{I_{n,1}, \ldots, I_{n,k}\}$ up to time $t = k\Delta t$, wherein $k$ is an integer denoting the k-th time bin of each set, and wherein index $n \in [1; N]$ identifies each set; and

in operation (II) computing the binned state $\overline{\rho}_k$ by:

(i) assigning an initial binned state $\overline{\rho}_0 = \rho_0$ at time $t = 0$; and
(ii) calculating the binned state of the quantum system at time $t = k\Delta t$ via the iterative formula $\bar{\rho}_k = \frac{\mathcal{K}_k(\bar{\rho}_{k-1})}{\text{Tr}[\mathcal{K}_k(\bar{\rho}_{k-1})]}$ wherein $\mathcal{K}_k$ is a completely positive map and is given by $\mathcal{K}_k = \left(\frac{1}{2\pi}\right)^N \int \ldots \int dp_1 \ldots dp_N \left(\prod_{n=1}^N e^{ipI_{n,k}}\right) \exp_{(k-1)\Delta t}^{k\Delta t}(\mathcal{L}^j)$ wherein $\int \ldots \int dp_1 \ldots dp_N$ denotes the multiple integral across variable $p_n$, wherein $\exp_{(k-1)\Delta t}^{k\Delta t}(\mathcal{O})$ denotes the time-ordered exponential of the superoperator $\mathcal{O}$, $\mathcal{L}^j$ is a generating Liouvillian superoperator depending on the binary or continuous output of the detector.

10. The method of any of claims 2-9, wherein the action of the completely positive map $\mathcal{K}_k$ on the binned state $\overline{\rho}_{k-1}$ at the $k$-th time bin, $\mathcal{K}_k(\overline{\rho}_{k-1})$, is computed by evaluating the integrand for a plurality of values of $p$, wherein at least some of the integrands are evaluated simultaneously using a vectorized-array computation.

11. The method of any preceding claim, wherein:

   (A) the plurality of physical parameters comprises a first set $\{\theta_1\}$ of one or more physical parameter(s) in the Liouvillian $\mathcal{L}(\theta_1)$ and/or the measurement back-action $\mathcal{M}_L(\theta_1)$ of the stochastic master equation describing the quantum system and/or a second set $\{\theta_2\}$ of one or more physical parameters of the initial state $\rho_0(\theta_2)$ at time $t = 0$ describing the initial state of the quantum system such that the binned state $\overline{\rho}_k$ is a function of the first $\{\theta_1\}$ and/or second $\{\theta_2\}$ sets, $\overline{\rho}_k(\theta_{1,2})$, and wherein operation (III)(a) comprises:
   numerically fitting the binned state $\overline{\rho}_k(\theta_{1,2})$ to the plurality of digitized discrete-time binned signals $\{I_1, ..., I_k\}$ to assign a value to at least one physical parameter of the first $\{\theta_1\}$ and/or second $\{\theta_2\}$ sets; and/or
   (B) the plurality of physical parameters comprises a third set of one or more physical parameters $\{\theta_3\}$ which parametrizes the input control signal(s) of the one or signal generator(s) such that the binned state $\overline{\rho}_k$ is a function of the third set $\{\theta_3\}$, $\overline{\rho}_k(\theta_3)$, and wherein operation (III)(b) comprises:

   defining a loss function as a function of the fidelity between a target quantum state $\rho_{k\Delta t}^{target}$ and the binned state $\overline{\rho}_k(\theta_3)$ at time $t = k\Delta t$, $\mathrm{F}\big(\rho_{k\Delta t}^{target}, \overline{\rho}_k(\theta)\big)$;
   determining a local minimum $\{\theta_{min}\}$ of the loss function within the space of physical control parameters of the input control signals; and
   using the local minimum $\{\theta_{min}\}$ as the set of physical parameters of the input control signal(s) in a subsequent control operation of the quantum system.

12. The method of any of claims 2-11, wherein operation (III) comprises calculating the probability of the discrete-time binned signal for the $k$-th time bin using the binned state $\overline{\rho}_{k-1}$ at the $(k - 1)$-th time bin using the formula $\mathbb{P}[I_k \mid \overline{\rho}_{k-1}] = \mathrm{Tr}[\mathcal{K}_k(\overline{\rho}_{k-1})]$.

13. A quantum characterisation or control unit comprising:

   a quantum system which comprises:

   (i) one or more quantum-state-hosting structure(s);
   (ii) a detector coupled to at least one of the quantum-state-hosting structure(s) and configured to measure continuous signals output from the one or more quantum-state-hosting structure(s) to provide measurement signals from the quantum system, wherein the detector uses time bins of duration $\Delta t$; and
   (iii) one or more signal generator(s) coupled to one or more quantum-state-hosting structure(s) and configured to input control signals to physically control the dynamics of the quantum system; and

   a command circuit configured to: (a) control the one or more signal generator(s) so as to physically control the dynamics of the quantum system, and (b) control the detector so as to provide measurement signals from the quantum system;
   wherein the command circuit is configured to perform the method according to any preceding claim.

14. A computer program product comprising instructions to cause the quantum characterisation or control unit of claim 13 to perform the method of claims 1-12.

15. A computer-readable medium having stored thereon the computer program product of claim 14.

**Fig. 1**

**Fig. 2**

Measure continuous signal to provide discrete-time binned signals

301

Compute binned state using the discrete-time binned signals

303

Use the binned state to assign a value to:

(a) physical parameter(s) characterizing the quantum system; and/or

(b) physical parameter(s) which parametrize the input control signal(s) to control the quantum system; and/or

(c) optimize a readout discriminator.

305

# Fig. 3

Fig. 4

$$I_k = \int_{k\Delta t}^{(k+1)\Delta t} f_k(t) I_t \, dt \rightarrow \{I_0, I_1, I_2, \ldots, I_N\}$$

sharp signal $l_t$    filtered signal $l_k$

parameters
$(\theta_1,...,\theta_p)$

Binned state

$$\bar{\rho}_k(\theta_1, ..., \theta_p) =$$
$$\mathbb{E}[\rho_{k\Delta t}(\theta_1, ..., \theta_p)|l_1, ..., l_k]$$

# Fig. 5

**600** Provide desired target state

**601** Compute binned state

**602** Calculate fidelity

**603** Above threshold value?

**604** Modify physically controllable parameters of operation or design parameters in SME

NO

YES

**605** Extract and use parameters corresponding to physically controllable parameters of operation or design parameters of entities

# Fig. 6

**Fig. 7**

EP 4 787 247 A1

**Fig. 8**

Fig. 9

Fig. 10

**Fig. 11**

Europäisches
Patentamt
European
Patent Office
Office européen
des brevets

# EUROPEAN SEARCH REPORT

**Application Number**

EP 25 30 5139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | PIERRE GUILMIN ET AL: "Parameters estimation by fitting correlation functions of continuous quantum measurement", ARXIV.ORG, CORNELL UNIVERSITY LIBRARY, 201 OLIN LIBRARY CORNELL UNIVERSITY ITHACA, NY 14853, 15 October 2024 (2024-10-15), XP091911194, * page 1 - page 16, left-hand column, paragraph 6 * * Appendices S1-S8 * ----- | 1-15 | INV. G06N10/40 G06N10/70 |
| A | CA 3 217 184 A1 (IQM FINLAND OY [FI]) 22 December 2022 (2022-12-22) * the whole document * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 2 July 2025 | Volkmer, Markus |

EPO FORM 1503 03.82 (P4C01)

## ANNEX TO THE EUROPEAN SEARCH REPORT
## ON EUROPEAN PATENT APPLICATION NO.

EP 25 30 5139

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | | Publication date | Patent family member(s) | | Publication date |
|---|---|---|---|---|---|
| CA 3217184 | A1 | 22-12-2022 | CA | 3217184 A1 | 22-12-2022 |
| | | | CN | 117377965 A | 09-01-2024 |
| | | | EP | 4356308 A1 | 24-04-2024 |
| | | | IL | 308916 A | 01-01-2024 |
| | | | JP | 2024524909 A | 09-07-2024 |
| | | | KR | 20240022542 A | 20-02-2024 |
| | | | TW | 202303467 A | 16-01-2023 |
| | | | US | 2024289672 A1 | 29-08-2024 |
| | | | WO | 2022263705 A1 | 22-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147
- EP 23306839
- EP 21306965
- EP 22306815
- EP 22306816

**Non-patent literature cited in the description**

- Resolving the energy levels of a nanomechanical oscillator. **P. ARRANGOIZ-ARRIOLA** ; **E. A. WOLLACK** ; **Z. WANG** ; **M. PECHAL** ; **W. JIANG** ; **T. P. MCKENNA** ; **J. D. WITMER** ; **R. VAN LAER** ; **A. H. SAFAVI-NAEINI**. Nature. 2019, vol. 571, 537
- **KOUNALAKIS** ; **MARIOS** ; **GERRIT EW BAUER** ; **YAROSLAV M. BLANTER**. Analog quantum control of magnonic cat states on a chip by a superconducting qubit. *Physical review letters*, 2022, vol. 129 (3), 037205
- **KOZIN** ; **VALERII K. et al.** Quantum phase transitions and cat states in cavity-coupled quantum dots. *Physical review research*, 2024, vol. 6 (3), 033188
- **LESCANNE** ; **RAPHAËL et al.** Exponential suppression of bit-flips in a qubit encoded in an oscillator. *Nature Physics*, 2020, vol. 16 (5), 509-513

- **AISSAOUI** ; **THIZIRI et al.** A cat qubit stabilization scheme using a voltage biased Josephson junction. *arXiv preprint arXiv:2411.08132*, 2024
- **ROUCHON** ; **PIERRE**. A tutorial introduction to quantum stochastic master equations based on the qubit/photon system. *Annual Reviews in Control*, 2022, vol. 54, 252-261
- **JACOBS** ; **KURT** ; **DANIEL A. STECK**. A straightforward introduction to continuous quantum measurement. *Contemporary Physics*, 2006, vol. 47 (5), 279-303
- **P. GUILMIN** ; **P. ROUCHON** ; **A. TILLOY**. Correlation functions for realistic continuous quantum measurement. *IFAC-PapersOnLine*, 2023, vol. 56 (2), 5164-5170
- **P. GUILMIN** ; **P. ROUCHON** ; **A. TILLOY**. Parameters estimation by fitting correlation functions of continuous quantum measurement. *arXiv preprint, no. 2410.11955*, 2024